# EUROPEAN PATENT APPLICATION

(11) **EP 2 666 984 A1**
(43) Date of publication of application: **27.11.2013**
(21) Application number: 12837619.1
(22) Date of filing: 09.04.2012
(51) Int. Cl.: F01N 3/08, F01N 3/36

(54) **EXHAUST PURIFICATION DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: UENISHI, Toru, Toyota-shi Aichi-ken 471-8571 (JP); YOSHIDA, Kohei, Toyota-shi Aichi-ken 471-8571 (JP); INOUE, Mikio, Toyota-shi Aichi-ken 471-8571 (JP)
(74) Representative: Kuhnen & Wacker
(86) International application number: PCT/JP2012/059710
(87) International publication number: WO 2013/153605

(57) **Abstract**

An exhaust purification system of an internal combustion engine is provided with a hydrocarbon feed valve which is arranged in an engine exhaust passage and an exhaust purification catalyst which reacts the NOₓ which is contained in exhaust gas and reformed hydrocarbons. It is formed to perform first operational control which feeds hydrocarbons from the hydrocarbon feed valve by within a predetermined range of amplitude and within a predetermined range of period and second operational control wherein the amount of feed of hydrocarbons from the hydrocarbon feed value in a predetermined time becomes greater than in the first operational control. In the second operational control, hydrocarbons are fed from the hydrocarbon feed valve by an injection pressure which is smaller than the injection pressure of hydrocarbons in the first operational control.

## Description

### Technical Field

The present invention relates to an exhaust purification system of an internal combustion engine.

### Background Art

The exhaust of diesel engines, gasoline engines, and other internal combustion engines includes, for example, carbon monoxide (CO), unburned fuel comprised of hydrocarbons (HC), nitrogen oxides (NO_{X}), particulate matter (PM), and other constituents. As devices for removing NO_{X}, a reduction catalyst which continuously reduces the NO_{X} which is contained in exhaust by the feed of a reducing agent to the exhaust purification catalyst or an NO_{X} storage catalyst which stores NO_{X} when the exhaust gas is lean in air-fuel ratio and releases the stored NO_{X} when the exhaust gas is made rich in air-fuel ratio are known.

Further, Japanese Patent Publication No. 9-220440 Al discloses an exhaust gas purification method which reacts the NO_{X} in exhaust gas and hydrocarbons to produce nitrogen-containing hydrocarbon compounds and then bring the nitrogen-containing hydrocarbon compounds into contact with a catalyst so as to reduce the NO_{X}. This publication discloses to convert NO_{X} to nitrogen-containing hydrocarbon compounds and then react them on a catalyst so as to remarkably improve the NO_{X} removal rate.

### Citations List

### Patent Literature

PLT 1: Japanese Patent Publication No. 9-220440 Al

### Summary of Invention

### Technical Problem

When using an NO_{X} storage catalyst to remove NO_{X}, sometimes the rise in the temperature of the exhaust gas which flows into the NO_{X} storage catalyst etc. cause the temperature of NO_{X} storage catalyst to rise. In this regard, if the NO_{X} storage catalyst becomes a certain high temperature or more, there was the problem that the NO_{X} removal rate became smaller.

On the other hand, in the exhaust purification system of an internal combustion engine, sometimes it is necessary to raise the temperature of a predetermined catalyst or filter. For example, sometimes the exhaust purification system includes a particulate filter for removing particulate matter. The particulate filter suffers from buildup of particulate matter if continuously operating. To remove the particulate matter which builds up on the particulate filter, the particulate filter is raised to a predetermined temperature or more. Further, if feeding the particulate filter an air excess exhaust gas, the particulate matter can be removed by oxidation.

An NO_{X} storage catalyst or other exhaust purification catalyst has an oxidation function of oxidizing hydrocarbons. By feeding hydrocarbons to a catalyst having such an oxidation function, the temperature of the exhaust purification catalyst can be raised. Alternatively, the temperature of the exhaust gas which flows out from the exhaust purification catalyst can be raised. As a result, the temperature of the particulate filter etc. which are arranged downstream of the exhaust purification catalyst can be made to rise.

In this regard, if feeding hydrocarbons to an exhaust purification catalyst which has an oxidation function, it is preferable to suppress the outflow of hydrocarbons from the exhaust purification catalyst. When another catalyst which has an oxidation function is arranged downstream of the exhaust purification catalyst, sometimes the hydrocarbons ended up oxidizing at the other catalyst and the other catalyst became overheated. For example, when a particulate filter which includes an oxidation catalyst is arranged downstream of the exhaust purification catalyst, the hydrocarbons which flow out from the exhaust purification catalyst are liable to flow into the particulate filter and the particulate filter is liable to exceed the allowable temperature. Alternatively, the hydrocarbons which flow out from the exhaust purification catalyst are liable to slip through the particulate filter and form white smoke.

The present invention has as its object to provide an exhaust purification system of an internal combustion engine which is provided with an exhaust purification catalyst which removes NO_{X}, which removes NO_{X} by a high removal rate even at a high temperature, and, furthermore, which suppresses the outflow of hydrocarbons from the exhaust purification catalyst which removes the NO_{X}.

### Solution to Problem

The exhaust purification system of an internal combustion engine of the present invention arranges a hydrocarbon feed valve for feeding hydrocarbons inside of an engine exhaust passage and arranges an exhaust purification catalyst for reacting the NO_{X} which is contained in exhaust gas and reformed hydrocarbons in the engine exhaust passage downstream of the hydrocarbon feed valve. On an exhaust flow surface of the exhaust purification catalyst, a precious metal catalyst is carried. Around the precious metal catalyst, basic exhaust flow surface parts are formed. The exhaust purification catalyst has the property of reducing the NO_{X} which is contained in exhaust gas if making the concentration of hydrocarbons which flow into the exhaust purification catalyst vibrate by a predetermined range of amplitude and a predetermined range of period and has the property of the stored amount of NO_{X} which is contained in the exhaust gas increasing if making the vibration period of the concentration of hydrocarbons longer a predetermined range. The system is formed to perform first operational control where the amplitude of change of the concentration of hydrocarbons which flow into the exhaust purification catalyst at the time of engine operation is made to become within the predetermined range of amplitude by controlling the amount of feed of hydrocarbons from the hydrocarbon feed valve and the concentration of hydrocarbons which flow into the exhaust purification catalyst is made to vibrate by within the predetermined range of period by controlling the feed interval of the hydrocarbons from the hydrocarbon feed valve and second operational control where the amount of feed of hydrocarbons from the hydrocarbon feed value in a predetermined time becomes greater than the amount of feed of hydrocarbons of the first operational control. The exhaust purification system is further provided with an injection pattern changing device which can change the injection pattern of hydrocarbons of a hydrocarbon feed valve. The injection pattern changing device is formed so as to enable change of the injection pressure of the hydrocarbon feed valve. The first operational control includes control so as to raise the injection pressure of the hydrocarbon feed valve the more the engine speed increases. In the first operational control, the injection pressure, which is set based on the operating state of the internal combustion engine, is used to feed hydrocarbons from the hydrocarbon feed valve. In the second operational control, an injection pressure smaller than the injection pressure of hydrocarbons at the first operational control is used to feed hydrocarbons from the hydrocarbon feed valve.

In the above invention, the injection pattern changing device is formed so that the injection time of injecting hydrocarbons from the hydrocarbon feed valve and the feed interval of the hydrocarbons can be changed. In the second operational control, the injection time of injecting hydrocarbons from the hydrocarbon feed valve can be made longer than the injection time of first operational control and the feed interval of the hydrocarbons can be made shorter than the feed interval of the hydrocarbons of the first operational control.

In the above invention, the operating state of the internal combustion engine can be used as the basis to set in advance the reference value of the air-fuel ratio of the exhaust gas which flows into the exhaust purification catalyst, and, during the period of the second operational control, the air-fuel ratio of the exhaust gas which flows into the exhaust purification catalyst can be detected and, when the detected air-fuel ratio of the exhaust gas is smaller than the reference value of the air-fuel ratio of the exhaust gas, correction can be performed to lower the injection pressure of the hydrocarbon feed valve.

In the above invention, when the detected air-fuel ratio of the exhaust gas is smaller than the reference value of the air-fuel ratio of the exhaust gas, correction can be performed to extend the injection time of the hydrocarbon feed valve and correction can be performed to shorten the feed interval of the hydrocarbons.

In the above invention, the operating state of the internal combustion engine can be used as the basis to set in advance the reference value of the temperature of the exhaust gas which flows into the exhaust purification catalyst, during the period of the second operational control, the temperature of the exhaust gas which flows into the exhaust purification catalyst can be detected, and when the detected temperature of the exhaust gas is smaller than the reference value of the temperature of the exhaust gas, correction can be performed to lower the injection pressure of the hydrocarbon feed valve.

In the above invention, when the detected temperature of the exhaust gas is smaller than the reference value of the temperature of the exhaust gas, correction can be performed to extend the injection time of the hydrocarbon feed valve and correction can be performed to shorten the feed interval of the hydrocarbons.

In the above invention, the operating state of the internal combustion engine can be used as the basis to set in advance the reference value of the amount of air which is fed from the outside air to a combustion chamber, during the period of second operational control, the amount of air which is fed from the outside air to a combustion chamber can be detected and, when the detected air amount is smaller than the reference value of the amount of air, correction can be performed to lower the injection pressure of the hydrocarbon feed valve.

In the above invention, when the detected air amount is smaller than the reference value of the air amount, correction can be performed to extend the injection time of the hydrocarbon feed valve and correction can be performed to shorten the feed interval of the hydrocarbons.

In the above invention, the second operational control can include control which increases the oxidation reaction of hydrocarbons at the exhaust purification catalyst over the first operational control so as to raise the temperature of the exhaust purification catalyst.

### Advantageous Effects of Invention

According to the present invention, it is possible to provide an exhaust purification system of an internal combustion engine which is provided with an exhaust purification catalyst which removes NO_{X} and which removes NO_{X} by a high removal rate even at a high temperature and, furthermore, suppresses the outflow of hydrocarbons from the exhaust purification catalyst which removes the NO_{X}.

### Brief Description of Drawings

FIG. 1 is an overall view of an internal combustion engine in an embodiment.
FIG. 2 is a view which schematically shows a surface part of a catalyst carrier of an exhaust purification catalyst.
FIG. 3 is a view which explains an oxidation reaction of hydrocarbons in an exhaust purification catalyst.
FIG. 4 is a view which shows changes in an air-fuel ratio of exhaust gas which flows into an exhaust purification catalyst in a first NO_{X} removal method.
FIG. 5 is a view which shows an NO_{X} removal rate of the first NO_{X} removal method.
FIG. 6A is an enlarged view which explains an oxidation reduction reaction of an exhaust purification catalyst in the first NO_{X} removal method.
FIG. 6B is an enlarged view which explains production of reducing intermediates in the first NO_{X} removal method.
FIG. 7A is an enlarged view which explains storage of NO_{X} in an exhaust purification catalyst in a second NO_{X} removal method.
FIG. 7B is an enlarged view which explains release and reduction of NO_{X} of an exhaust purification catalyst in the second NO_{X} removal method.
FIG. 8 is a view which shows changes in an air-fuel ratio of exhaust gas which flows into an exhaust purification catalyst in the second NO_{X} removal method.
FIG. 9 is a view which shows an NO_{X} removal rate in the second NO_{X} removal method.
FIG. 10 is a time chart which shows changes in an air-fuel ratio of exhaust gas which flows into an exhaust purification catalyst in the first NO_{X} removal method.
FIG. 11 is another time chart which shows changes in the air-fuel ratio of exhaust gas which flows into an exhaust purification catalyst in the first NO_{X} removal method.
FIG. 12 is a view which shows the relationship between the oxidizing power of an exhaust purification catalyst and a demanded minimum air-fuel ratio X in the first NO_{X} removal method.
FIG. 13 is a view which shows the relationship between a concentration of oxygen in exhaust gas and an amplitude ΔH of the concentration of hydrocarbons which gives the same NO_{X} removal rate in the first NO_{X} removal method.
FIG. 14 is a view which shows the relationship between an amplitude ΔH of the concentration of hydrocarbons and an NO_{X} removal rate in the first NO_{X} removal method.
FIG. 15 is a view which shows the relationship between a vibration period ΔT of the concentration of hydrocarbons and an NO_{X} removal rate in the first NO_{X} removal method.
FIG. 16 is a view which shows changes in the air-fuel ratio of the exhaust gas which flows into the exhaust purification catalyst, etc., in the second NO_{X} removal method.
FIG. 17 is a view which shows a map of an NO_{X} amount NOXA which is exhausted from an engine body to the engine exhaust passage.
FIG. 18 is a view which shows a fuel injection timing when performing auxiliary injection in a combustion chamber.
FIG. 19 is a view which shows a map of the hydrocarbon feed amount WR when performing auxiliary injection.
FIG. 20 is a graph which explains the regions of the NO_{X} removal methods based on the operating state of the internal combustion engine.
FIG. 21 is a view which shows the change in concentration of hydrocarbons in the exhaust gas which flows into the exhaust purification catalyst etc. when changing the injection time of the hydrocarbon feed valve.
FIG. 22 is a view which explains the temperature of the exhaust purification catalyst with respect to the engine speed and the fuel injection amount.
FIG. 23 is a view which shows injection patterns of hydrocarbons from the hydrocarbon feed valve and changes in concentration of hydrocarbons in the exhaust gas which flows into the exhaust purification catalyst.
FIG. 24 is a view which shows injection patterns of hydrocarbons from the hydrocarbon feed valve and changes in concentration of hydrocarbons in the exhaust gas which flows into the exhaust purification catalyst.
FIG. 25 is a view which shows injection patterns of hydrocarbons from the hydrocarbon feed valve and changes in concentration of hydrocarbons in the exhaust gas which flows into the exhaust purification catalyst.
FIG. 26 is a view which shows changes in concentration of hydrocarbons in the exhaust gas which flows into the exhaust purification catalyst etc. when changing the injection pressure of the hydrocarbon feed valve.
FIG. 27 is a view which shows injection patterns of hydrocarbons from the hydrocarbon feed valve and changes in concentration of hydrocarbons in the exhaust gas which flows into the exhaust purification catalyst etc.
FIG. 28 is a view which shows injection patterns of hydrocarbons from the hydrocarbon feed valve and changes in concentration of hydrocarbons in the exhaust gas which flows into the exhaust purification catalyst, etc..
FIG. 29A is a graph which explains an injection pressure of the hydrocarbon feed valve based on the operating state of the internal combustion engine.
FIG. 29B is a map of an injection pressure of the hydrocarbon feed valve based on an operating state of the internal combustion engine.
FIG. 30A is a graph which explains an injection time of the hydrocarbon feed valve based on an operating state of the internal combustion engine.
FIG. 30B is a map of an injection time of the hydrocarbon feed valve based on an operating state of the internal combustion engine.
FIG. 31 is a map of a feed interval of the hydrocarbons from the hydrocarbon feed valve based on an operating state of the internal combustion engine.
FIG. 32 is a view which explains injection patterns of the hydrocarbon feed valve and changes in the concentration of hydrocarbons which flow into the exhaust purification catalyst in first operational control and second operational control.
FIG. 33 is a time chart of the switching from first operational control to second operational control in an embodiment.
FIG. 34A is a map of the injection pressure of hydrocarbons which are fed from a hydrocarbon feed valve in second operational control.
FIG. 34B is a map of the injection time of hydrocarbons which are fed from a hydrocarbon feed valve in second operational control.
FIG. 35 is a map of the feed interval of hydrocarbons which are fed from a hydrocarbon feed valve in second operational control.
FIG. 36 is a schematic view of another exhaust purification system in the embodiment.
FIG. 37 is a map of the reference value of the air-fuel ratio of the exhaust gas which flows into an exhaust purification catalyst in second operational control.
FIG. 38A is a graph of a correction coefficient of the injection pressure of the hydrocarbon feed valve with respect to the ratio of the air-fuel ratio of the exhaust gas which flows into the exhaust purification catalyst.
FIG. 38B is a graph of a correction coefficient of the injection time of the hydrocarbon feed valve with respect to the ratio of the air-fuel ratio of the exhaust gas which flows into the exhaust purification catalyst.
FIG. 38C is a graph of a correction coefficient of the feed interval of hydrocarbons with respect to the ratio of the air-fuel ratio of the exhaust gas which flows into the exhaust purification catalyst.
FIG. 39 is a flow chart of control for correction of an injection pattern of the hydrocarbon feed valve in second operational control.
FIG. 40 is a schematic view of still another exhaust purification system in the embodiment.
FIG. 41 is a map of the reference value of the temperature of the exhaust gas which flows into the exhaust purification catalyst in second operational control.
FIG. 42A is a graph of a correction coefficient of the injection pressure of the hydrocarbon feed valve with respect to the ratio of the temperature of the exhaust gas which flows into the exhaust purification catalyst.
FIG. 42B is a graph of a correction coefficient of the injection time of the hydrocarbon feed valve with respect to the ratio of the temperature of the exhaust gas which flows into the exhaust purification catalyst.
FIG. 42C is a graph of a correction coefficient of the feed interval of the hydrocarbons from the hydrocarbon feed valve with respect to the ratio of the temperature of the exhaust gas which flows into the exhaust purification catalyst.
FIG. 43 is a map of a reference value of the amount of air which is fed to a combustion chamber in second operational control.
FIG. 44A is a graph of a correction coefficient of the injection pressure of a hydrocarbon feed valve with respect to the ratio of the amount of air which is fed to a combustion chamber.
FIG. 44B is a graph of a correction coefficient of the injection time of the hydrocarbon feed valve with respect to the ratio of the amount of air which is fed to a combustion chamber.
FIG. 44C is a graph of a correction coefficient of the feed interval of hydrocarbons with respect to the ratio of the amount of air which is fed to a combustion chamber.

### Description of Embodiments

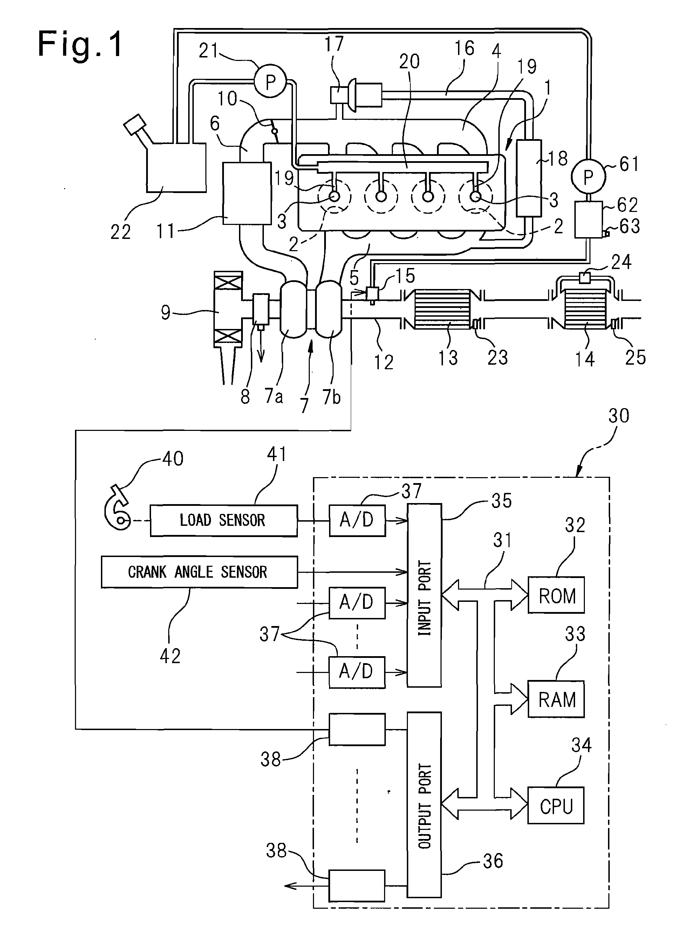

Referring to FIG. 1 to FIG. 44C, an exhaust purification system of an internal combustion engine in an embodiment will be explained. In the present embodiment, a compression ignition type of internal combustion engine which is mounted in a vehicle will be taken up as an example for the explanation.

FIG. 1 is an overall view of an internal combustion engine in the present embodiment. The internal combustion engine is provided with an engine body 1. Further, the internal combustion engine is provided with an exhaust purification system which purifies the exhaust gas. The engine body 1 includes combustion chambers 2 as cylinders, electronically controlled fuel injectors 3 for injecting fuel to the combustion chambers 2, an intake manifold 4, and an exhaust manifold 5.

The intake manifold 4 is connected through an intake duct 6 to an outlet of a compressor 7a of an exhaust turbocharger 7. An inlet of the compressor 7a is connected through an intake air detector 8 to an air cleaner 9. Inside the intake duct 6, a throttle valve 10 is arranged which is driven by a step motor. Furthermore, in the middle of the intake duct 6, a cooling device 11 is arranged for cooling the intake air which flows through the inside of the intake duct 6. In the embodiment which is shown in FIG. 1, engine cooling water is guided to the cooling device 11. The engine cooling water is used to cool the intake air.

The exhaust purification system of the present embodiment is provided with an exhaust purification catalyst 13 for removing NO_{X}. Further, the exhaust purification system is provided with an after treatment device constituted by a particulate filter 14 which is arranged downstream of the exhaust purification catalyst 13. The exhaust manifold 5 is connected to the inlet of the exhaust turbine 7b of the exhaust turbocharger 7. An outlet of the exhaust turbine 7b is connected through an exhaust pipe 12 to an inlet of an exhaust purification catalyst 13. An outlet of the exhaust purification catalyst 13 is connected to the particulate filter 14.

Upstream of the exhaust purification catalyst 13, a hydrocarbon feed valve 15 is arranged for feeding hydrocarbons comprised of diesel oil which is used as the fuel of a compression ignition type internal combustion engine or other fuel. In the present embodiment, diesel oil is used as the hydrocarbons which are fed from the hydrocarbon feed valve 15. Note that, the present invention can also be applied to a spark ignition type of internal combustion engine in which the air-fuel ratio at the time of combustion is controlled to be lean. In this case, from the hydrocarbon feed valve, hydrocarbons comprised of gasoline which is used as the fuel of the spark ignition type of internal combustion engine or other fuel are fed.

The hydrocarbon feed valve 15 is connected to a high pressure fuel chamber 62. The high pressure fuel chamber 62 is connected to a fuel tank 22 through a pressurizing pump 61. The pressurizing pump 61 is driven whereby fuel of the fuel tank 22 is fed to the high pressure fuel chamber 62. The high pressure fuel chamber 62 stores high pressure fuel. The pressure of the fuel of the high pressure fuel chamber 62 corresponds to the injection pressure when injecting hydrocarbons from the hydrocarbon feed valve 15. In the high pressure fuel chamber 62, a fuel pressure sensor 63 is arranged as a pressure detector which detects the pressure of the fuel. The output of the fuel pressure sensor 63 enables the injection pressure of the hydrocarbon feed valve 15 to be detected.

Between the exhaust manifold 5 and the intake manifold 4, an EGR passage 16 is arranged for exhaust gas recirculation (EGR). In the EGR passage 16, an electronic control type of EGR control valve 17 is arranged. Further, in the middle of the EGR passage 16, a cooling device 18 is arranged for cooling the EGR gas which flows through the inside of the EGR passage 16. In the embodiment which is shown in FIG. 1, engine cooling water is guided to the inside of the cooling device 18. The engine cooling water is used to cool the EGR gas.

The respective fuel injectors 3 are connected through fuel feed tubes 19 to a common rail 20. The common rail 20 is connected through an electronic control type of variable discharge fuel pump 21 to a fuel tank 22. The fuel which is stored in the fuel tank 22 is fed by the fuel pump 21 to the inside of the common rail 20. The fuel which is fed to the common rail 20 is fed through the respective fuel feed tubes 19 to the fuel injectors 3.

An electronic control unit 30 includes a digital computer. The electronic control unit 30 in the present embodiment functions as a control device of the exhaust purification system. The electronic control unit 30 includes components which are connected to each other by a bidirectional bus 31 such as a ROM (read only memory) 32, RAM (random access memory) 33, CPU (microprocessor) 34, input port 35, and output port 36.

Downstream of the exhaust purification catalyst 13, a temperature sensor 23 is arranged for detecting the temperature of the exhaust purification catalyst 13. The particulate filter 14 has a differential pressure sensor 24 attached to it for detecting a differential pressure before and after the particulate filter 14. Further, downstream of the particulate filter 14, a temperature sensor 25 is arranged as a temperature detector which detects the temperature of the particulate filter 14. The output signals of the temperature sensors 23, 25, differential pressure sensor 24, and intake air detector 8 are input through respectively corresponding AD converters 37 to the input port 35.

Further, an accelerator pedal 40 has a load sensor 41 connected to it which generates an output voltage which is proportional to the amount of depression of the accelerator pedal 40. The output voltage of the load sensor 41 is input through a corresponding AD converter 37 to the input port 35. Furthermore, the input port 35 has connected to it a crank angle sensor 42 which generates an output pulse every time the crankshaft rotates by for example 15°. The output of the crank angle sensor 42 can be used to detect the crank angle or the engine speed. On the other hand, the output port 36 is connected through corresponding drive circuits 38 to the fuel injectors 3, step motor for driving the throttle valve 10, hydrocarbon feed valve 15, EGR control valve 17, and fuel pump 21. These fuel injectors 3, throttle valve 10, hydrocarbon feed valve 15, EGR control valve 17, etc. are controlled by the electronic control unit 30.

The output signal of the fuel pressure sensor 63 is input to the electronic control unit 30. Further, the pressurizing pump 61 is controlled by the electronic control unit 30. The pressurizing pump 61 is controlled so that the pressure at the inside of the high pressure fuel chamber 62 becomes the demanded injection pressure of the hydrocarbon feed valve 15. The injection pressure of the hydrocarbon feed valve 15 can be set based on the operating state of the internal combustion engine. Alternatively, the injection pressure can be maintained substantially constant regardless of the operating state of the internal combustion engine.

The particulate filter 14 is a filter which removes carbon particles, sulfates, and other particulate which is contained in the exhaust gas. The particulate filter 14, for example, has a honeycomb structure and has a plurality of channels which extend in the direction of flow of the gas. In the plurality of channels, channels with downstream ends sealed and channels with upstream ends sealed are alternately formed. The partition walls of the channels are formed by a porous material such as cordierite. If the exhaust is passed through the partition walls, the particulate is trapped. The particulate is trapped at the particulate filter 14. The particulate which gradually builds up on the particulate filter 14 is removed by oxidation by raising the temperature inside an air-rich atmosphere to for example 650°C or so.

The amount of particulate matter which builds up at the particulate filter 14 can for example be estimated by the output of the pressure difference sensor 24. When the pressure difference before and after the particulate filter 14 exceeds a predetermined judgment value, it can be judged that the amount of particulate matter which has built up at the particulate filter 14 has exceeded the judgment value.

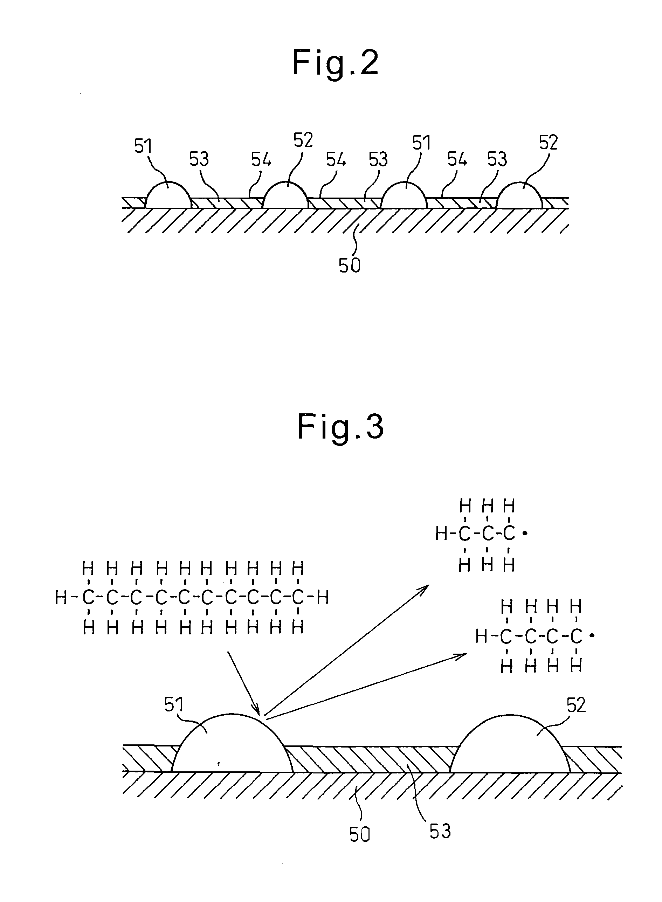

FIG. 2 schematically shows a surface part of the catalyst carrier which is carried on the substrate of the exhaust purification catalyst. In this exhaust purification catalyst 13, as shown in FIG. 2, precious metal catalysts 51, 52 constituted by catalyst particles are carried on a catalyst carrier 50 comprised of for example alumina. Furthermore, on the catalyst carrier 50, a basic layer 53 is formed which includes at least one element selected from potassium K, sodium Na, cesium Cs, or other such alkali metal, barium Ba, calcium Ca, or other such alkali earth metal, a lanthanide and other rare earths and silver Ag, copper Cu, iron Fe, iridium Ir, and other such metals able to donate electrons to NO_{X}. The exhaust gas flows along the catalyst carrier 50, so the precious metal catalysts 51, 52 can be said to be carried on the exhaust gas flow surface of the exhaust purification catalyst 13. Further, the surface of the basic layer 53 exhibits basicity, so the surface of the basic layer 53 is called a "basic exhaust gas flow surface part 54".

On the other hand, in FIG. 2, the precious metal catalysts 51 are comprised of platinum Pt, while the precious metal catalysts 52 are comprised of rhodium Rh. Note that in this case, either of the precious metal catalysts 51, 52 can also be comprised of platinum Pt. Further, the catalyst carrier 50 of the exhaust purification catalyst 13 can further carry palladium Pd in addition to platinum Pt and rhodium Rh or can carry palladium Pd instead of rhodium Rh. That is, the precious metal catalysts 51, 52 which are carried on the catalyst carrier 50 are comprised of platinum Pt and at least one of rhodium Rh and palladium Pd.

If hydrocarbons are injected from the hydrocarbon feed valve 15 into the exhaust gas, the hydrocarbons are reformed at the exhaust purification catalyst 13. In the present invention, the hydrocarbons which were reformed at this time are used to remove the NO_{X} at the exhaust purification catalyst 13. FIG. 3 schematically shows the reformation action which is performed in the exhaust purification catalyst 13 at this time. As shown in FIG. 3, the hydrocarbons HC which are injected from the hydrocarbon feed valve 15 become radical state hydrocarbons HC with few carbon atoms due to the catalyst 51.

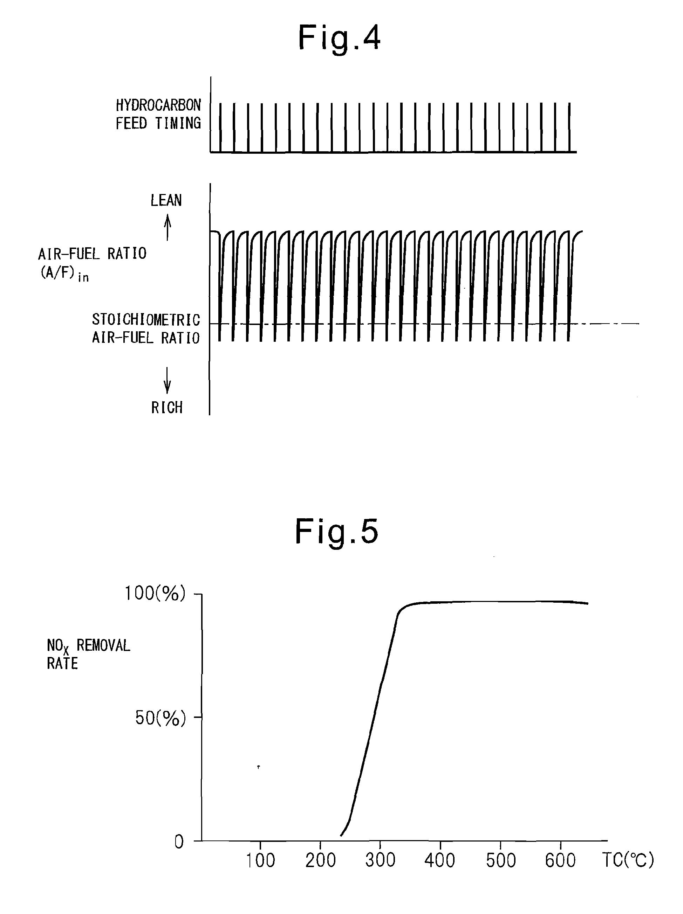

FIG. 4 shows the timing of feed of hydrocarbons from the hydrocarbon feed valve 15 and the change in the air-fuel ratio (A/F)in of the exhaust gas which flows into the exhaust purification catalyst 13. Note that, the change of the air-fuel ratio (A/F)in depends on the change in the concentration of hydrocarbons in the exhaust gas which flows into the exhaust purification catalyst 13, so the change in the air-fuel ratio (A/F)in which is shown in FIG. 4 can be said to express the change in the concentration of hydrocarbons. However, if the concentration of hydrocarbons becomes higher, the air-fuel ratio (A/F)in becomes smaller, so in FIG. 4, the richer the air-fuel ratio (A/F)in, the higher the concentration of hydrocarbons.

FIG. 5 shows the NO_{X} removal rate by the exhaust purification catalyst 13 with respect to each catalyst temperature TC of the exhaust purification catalyst 13 when periodically changing the concentration of hydrocarbons which flow into the exhaust purification catalyst 13 so as to change the air-fuel ratio (A/F)in of the exhaust gas which flows into the exhaust purification catalyst 13 as shown in FIG. 4. The inventors engaged in extensive research on NO_{X} removal over a long period of time and in the process of the research learned that if making the concentration of hydrocarbons which flow into the exhaust purification catalyst 13 vibrate by within a predetermined range of amplitude and by within a predetermined range of period, as shown in FIG. 5, an extremely high NO_{X} removal rate is obtained even in the 400°C or higher high temperature region.

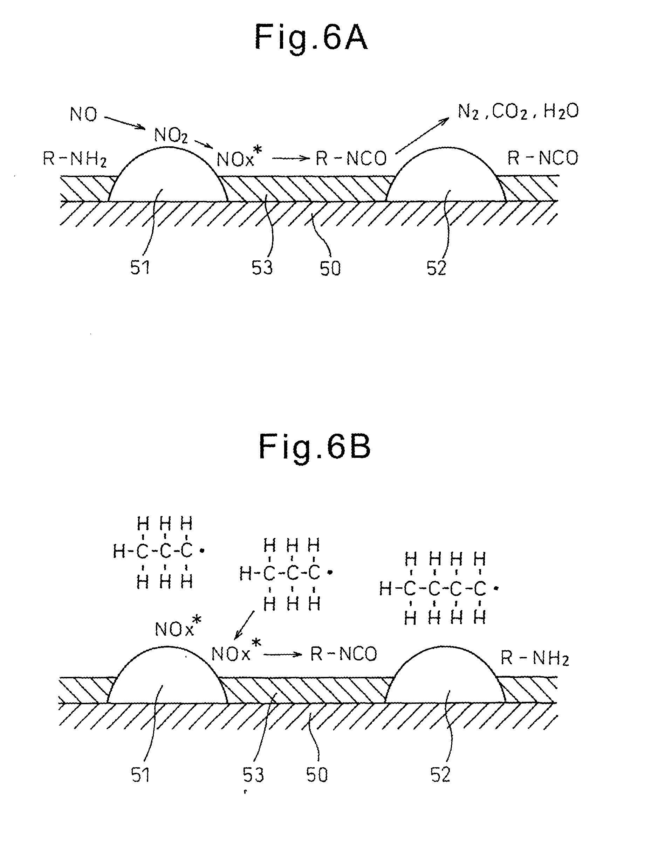

Furthermore, at this time, they learned that a large amount of reducing intermediates containing nitrogen and hydrocarbons continues to be held or adsorbed on the surface of the basic layer 53, that is, on the basic exhaust gas flow surface parts 54 of the exhaust purification catalyst 13, and these reducing intermediates play a central role in obtaining a high NO_{X} removal rate. Next, this will be explained with reference to FIG. 6A and FIG. 6B. Note that, FIG. 6A and FIG. 6B schematically show surface parts of the catalyst carrier 50 of the exhaust purification catalyst 13. FIG. 6A and FIG. 6B show the reaction which is presumed to occur when making the concentration of hydrocarbons which flow into the exhaust purification catalyst 13 vibrate by within a predetermined range of amplitude and by within a predetermined range of period.

FIG. 6A shows when the concentration of hydrocarbons which flows into the exhaust purification catalyst 13 is low, while FIG. 6B shows when hydrocarbons are fed from the hydrocarbon feed valve 15 and the concentration of hydrocarbons which flow into the exhaust purification catalyst 13 becomes higher.

Now, as will be understood from FIG. 4, the air-fuel ratio of the exhaust gas which flows into the exhaust purification catalyst 13 is maintained lean except for an instant, so the exhaust gas which flows into the exhaust purification catalyst 13 usually becomes an excess of oxygen. At this time, part of the NO which is contained in the exhaust gas sticks on the exhaust purification catalyst 13, part of the NO which is contained in the exhaust gas, as shown in FIG. 6A, is oxidized on the precious metal catalysts 51 of platinum and become NO₂, then this NO₂ is further oxidized and becomes NO₃. Further, part of the NO₂ becomes NO₂⁻. Therefore, NO₂⁻ and NO₃ are produced on the precious metal catalysts 51 of platinum Pt. The NO which is deposited on the exhaust purification catalyst 13 and the NO₂⁻ and NO₃ which are produced on the platinum Pt 51 are strong in activity. Therefore, below, these NO, NO₂⁻, and NO₃ will be called "active NO_{X}".

On the other hand, if hydrocarbons are fed from the hydrocarbon feed valve 15, the hydrocarbons are adsorbed over the entire exhaust purification catalyst 13. The majority of the adsorbed hydrocarbons successively react with the oxygen and are burned. Part of the adsorbed hydrocarbons are successively reformed inside the exhaust purification catalyst 13 and become radicals as shown in FIG. 3. Therefore, as shown in FIG. 6B, the concentration of hydrocarbons around the active NO_{X} becomes higher. In this regard, after the active NO_{X} is produced, if the state of a high concentration of oxygen around the active NO_{X} continues for a certain time period or more, the active NO_{X} will be oxidized and will be absorbed in the form of nitric acid ions N0₃⁻ inside the basic layer 53. However, if the concentration of hydrocarbons around the active NO_{X} becomes higher before this certain time period elapses, as shown in FIG. 6B, the active NO_{X} will react with the radical state hydrocarbons HC on the precious metal catalysts 51 of platinum whereby the reducing intermediates will be produced. These reducing intermediates are held or adsorbed on the surface of the basic layer 53.

Note that, the reducing intermediate which is first produced at this time is believed to be the nitro compound R-NO₂. This nitro compound R-NO₂ becomes the nitrile compound R-CN when produced, but this nitrile compound R-CN can only survive in that state for an instant, so immediately becomes the isocyanate compound R-NCO. This isocyanate compound R-NCO becomes the amine compound R-NH₂ if hydrolyzed. However, in this case, what is hydrolyzed is believed to be part of the isocyanate compound R-NCO. Therefore, as shown in FIG. 6B, the majority of the reducing intermediates which are held or adsorbed on the surface of the basic layer 53 is believed to be the isocyanate compound R-NCO and amine compound R-NH₂.

On the other hand, when, as shown in FIG. 6B, hydrocarbons HC are adsorbed around the produced reducing intermediates, the reducing intermediates are blocked by the hydrocarbons HC and will not react further. In this case, the concentration of hydrocarbons which flow into the exhaust purification catalyst 13 falls, then the hydrocarbons which are adsorbed around the reducing intermediates are oxidized and consumed. Due to this, if the concentration of oxygen around the reducing intermediates rises, as shown in FIG. 6A, the reducing intermediates will react with the active NO_{X}, react with the surrounding oxygen, or break down on their own. Due to this, the reducing intermediates R-NCO and R-NH₂ will be converted to N₂, CO₂, and H₂O and therefore the NO_{X} will be removed.

In this way, in the exhaust purification catalyst 13, the concentration of hydrocarbons which flow into the exhaust purification catalyst 13 is raised to produce reducing intermediates and the concentration of hydrocarbons which flow into the exhaust purification catalyst 13 is lowered, then, when the concentration of oxygen becomes high, the reducing intermediates are made to react with the active NO_{X} or oxygen or self break down whereby the NO_{X} is removed. That is, to use the exhaust purification catalyst 13 to remove the NO_{X}, it is necessary to periodically change the concentration of hydrocarbons which flow into the exhaust purification catalyst 13.

Of course, in this case, it is necessary to raise the concentration of hydrocarbons to a concentration sufficiently high for producing the reducing intermediates. It is necessary to lower the concentration of hydrocarbons to a concentration sufficiently low for the produced reducing intermediates to be reacted with the active NO_{X} or oxygen or to break down on their own. That is, it is necessary to make the concentration of hydrocarbons which flow into the exhaust purification catalyst 13 vibrate by within a predetermined range of amplitude. Note that, in this case, it is necessary to hold the produced reducing intermediates R-NCO and R-NH₂ on the basic layer 53, that is, on the basic exhaust gas flow surface parts 54, until the reducing intermediates react with the active NO_{X} or oxygen or until they break down on their own. The basic exhaust gas flow surface parts 54 are provided for this purpose.

On the other hand, if lengthening the feed interval of hydrocarbons, the time period during which the concentration of oxygen becomes higher in the interval after hydrocarbons are fed to when hydrocarbons are next fed becomes longer and therefore the active NO_{X} is absorbed inside the basic layer 53 in the form of nitrates without producing reducing intermediates. To avoid this, it is necessary to make the concentration of hydrocarbons which flow into the exhaust purification catalyst 13 vibrate by within a predetermined range of period.

Therefore, in an embodiment of the present invention, to make the NO_{X} which is contained in the exhaust gas and the reformed hydrocarbons react to produce reducing intermediates R-NCO and R-NH₂ which contain nitrogen and hydrocarbons, precious metal catalysts 51 and 52 are carried on the exhaust gas flow surface of the exhaust purification catalyst 13. To hold the produced reducing intermediates R-NCO and R-NH₂ in the exhaust purification catalyst 13, basic exhaust gas flow surface parts 54 are formed around the precious metal catalysts 51, 52. The reducing intermediates R-NCO and R-NH₂ which are held on the basic exhaust gas flow surface part 54 are converted to N₂, CO₂, and H₂O. The vibration period of the concentration of hydrocarbons is made the vibration period which is necessary for continued production of the reducing intermediates R-NCO and R-NH₂. Incidentally, in the example which is shown in FIG. 4, the feed interval is made 3 seconds.

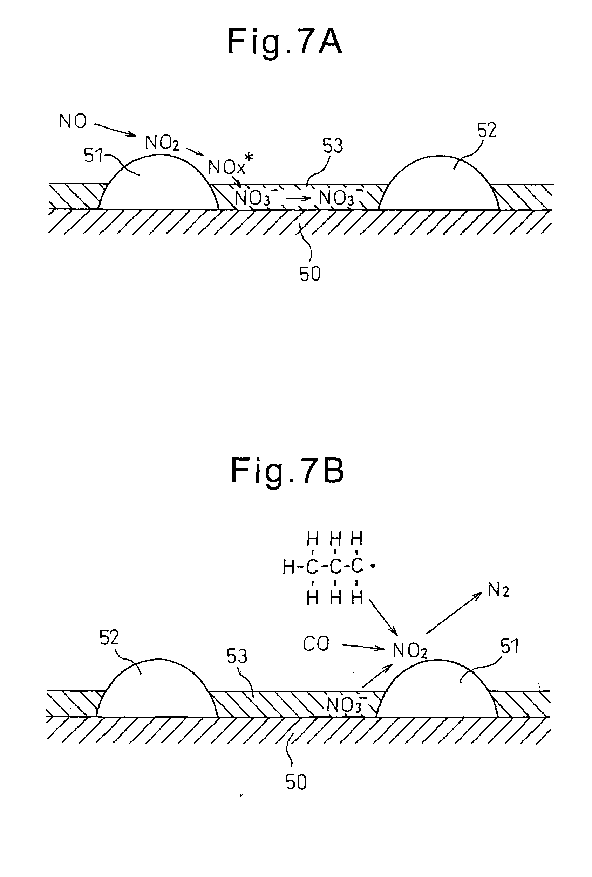

If the vibration period of the concentration of hydrocarbons, that is, the feed interval of hydrocarbons HC, becomes longer than the above predetermined range of period, the reducing intermediates R-NCO and R-NH₂ will disappear from the surface of the basic layer 53. At this time, the active NO_{X} which is formed on the precious metal catalysts 51 of platinum Pt at this time, as shown in FIG. 7A, disperses in the form of nitric acid ions NO₃⁻ inside of the basic layer 53 and become nitrates. That is, at this time, the NO_{X} in the exhaust gas is absorbed inside the basic layer 53 in the form of nitrates.

On the other hand, FIG. 7B shows the case where when, in this way, NO_{X} is absorbed in the basic layer 53 in the form of nitrates, the air-fuel ratio of the exhaust gas which flows into the exhaust purification catalyst 13 is made the stoichiometric air-fuel ratio or rich. In this case, the concentration of oxygen in the exhaust gas falls, so the reaction proceeds in the opposite direction (NO₃⁻→NO₂) and therefore the nitrates which are absorbed inside the basic layer 53 successively become nitric acid ions NO₃⁻ and, as shown in FIG. 7B, are released in the form of NO₂ from the basic layer 53. Next, the released NO₂ is reduced by the hydrocarbons HC and CO which are contained in the exhaust gas.

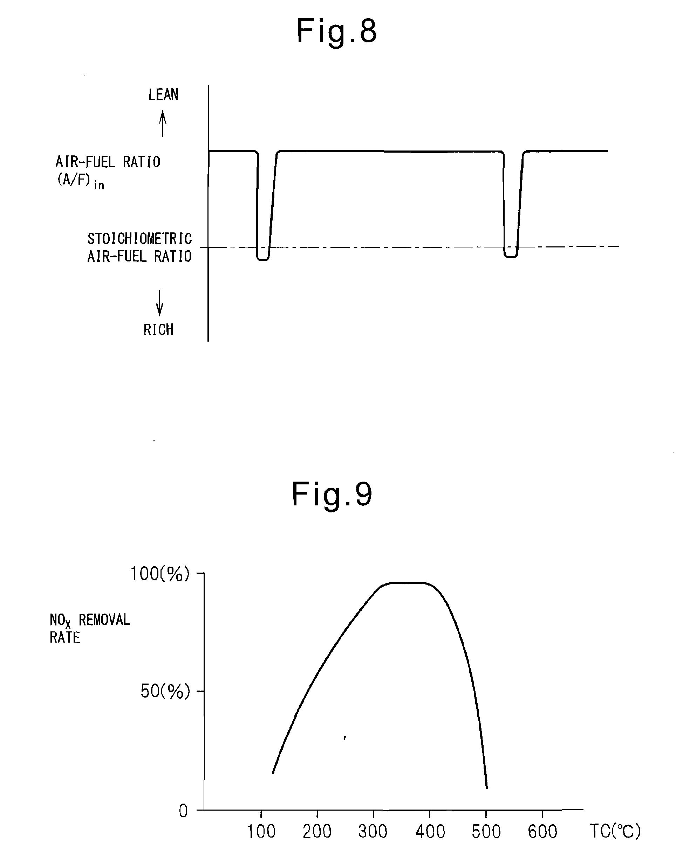

FIG. 8 shows the case of making the air-fuel ratio (A/F)in of the exhaust gas which flows into the exhaust purification catalyst 13 temporarily rich slightly before the NO_{X} absorption ability of the basic layer 53 becomes saturated. Note that, in the example which is shown in FIG. 8, the time interval of this rich control is 1 minute or more. In this case, the NO_{X} which was absorbed inside the basic layer 53 when the air-fuel ratio (A/F)in of the exhaust gas is lean is released all at once from the basic layer 53 and reduced when the air-fuel ratio (A/F)in of the exhaust gas is made temporarily rich. Therefore, in this case, the basic layer 53 performs the role of an absorbent for temporarily absorbing the NO_{X}.

Note that, at this time, sometimes the basic layer 53 temporarily adsorbs the NO_{X}. Therefore, if using the term "storage" as a term including both absorption and adsorption, at this time the basic layer 53 performs the role of an NO_{X} storage agent for temporarily storing the NO_{X}. That is, in this case, if referring to the ratio of the air and fuel (hydrocarbons) which are fed into the engine intake passage, combustion chambers 2, and exhaust passage upstream of the exhaust purification catalyst 13 as the "air-fuel ratio (A/F) of the exhaust gas", the exhaust purification catalyst 13 functions as an NO_{X} storage catalyst which stores the NO_{X} when the air-fuel ratio of the exhaust gas is lean and releases the stored NO_{X} when the concentration of oxygen in the exhaust gas falls.

FIG. 9 shows the NO_{X} removal rate when making the exhaust purification catalyst 13 function as an NO_{X} storage catalyst in this way. Note that, the abscissa of FIG. 9 indicates the catalyst temperature TC of the exhaust purification catalyst 13. When making the exhaust purification catalyst 13 function as an NO_{X} storage catalyst, as shown in FIG. 9, when the catalyst temperature TC is from 300°C to 400°C, an extremely high NO_{X} removal rate is obtained, but if the catalyst temperature TC becomes a 400°C or more high temperature, the NO_{X} removal rate falls.

In this way, the NO_{X} removal rate falls if the catalyst temperature TC becomes 400°C or more because if the catalyst temperature TC becomes 400°C or more, nitrates break down by heat and are released in the form of NO₂ from the exhaust purification catalyst 13. That is, so long as storing NO_{X} in the form of nitrates, when the catalyst temperature TC is high, a high NO_{X} removal rate is hard to obtain. However, in the new NO_{X} removal method which is shown from FIG. 4 to FIG. 6A and FIG. 6B, as will be understood from FIG. 6A and FIG. 6B, nitrates are not produced or even if produced are extremely small in amount. Therefore, as shown in FIG. 5, even when the catalyst temperature TC is high, a high NO_{X} removal rate is obtained.

Therefore, in the present invention, a hydrocarbon feed valve 15 for feeding hydrocarbons is arranged inside the engine exhaust passage, an exhaust purification catalyst 13 for making the NO_{X} which is contained in exhaust gas and reformed hydrocarbons react is arranged downstream of the hydrocarbon feed valve 15 in the engine exhaust passage, the exhaust gas flow surface of the exhaust purification catalyst 13 carries precious metal catalysts 51, 52, and basic exhaust gas flow surface parts 54 are formed around the precious metal catalysts 51, 52. The exhaust purification catalyst 13 has the property of reducing the NO_{X} which is contained in the exhaust gas if making the concentration of hydrocarbons which flow into the exhaust purification catalyst 13 vibrate by within a predetermined range of amplitude and by within a predetermined range of period and has the property of the amount of storage of NO_{X} which is contained in the exhaust gas increasing if making the vibration period of the concentration of hydrocarbons longer than this predetermined range. At the time of engine operation, the concentration of hydrocarbons which flow into the exhaust purification catalyst 13 is made to vibrate by within a predetermined range of amplitude and by within a predetermined range of period so as to thereby reduce the NO_{X} which is contained in the exhaust gas at the exhaust purification catalyst 13.

That is, the NO_{X} removal method which is shown from FIG. 4 to FIG. 6A and FIG. 6B can be said to be a new NO_{X} removal method designed to remove the NO_{X} without forming almost any nitrates when using an exhaust purification catalyst which carries precious metal catalysts and forms a basic layer which can absorb the NO_{X}. In actuality, when using this new NO_{X} removal method, the amount of nitrates which are detected from the basic layer 53 becomes extremely small compared to when making the exhaust purification catalyst 13 function as an NO_{X} storage catalyst. Note that, this new NO_{X} removal method will be referred to below as the "first NO_{X} removal method".

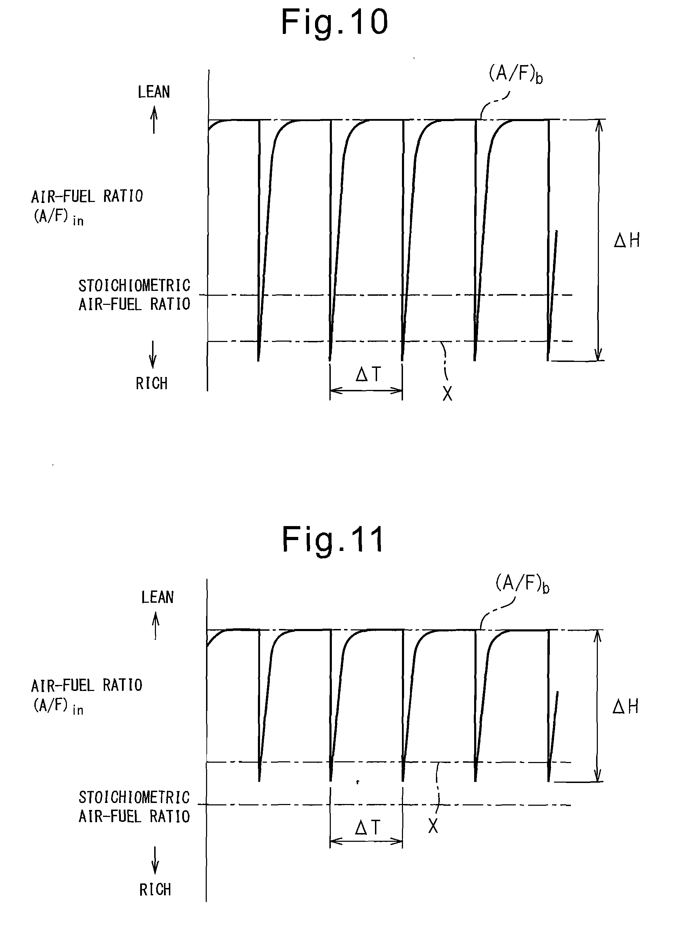

Next, this first NO_{X} removal method will be explained in a bit more detail while referring to FIG. 10 to FIG. 15.

FIG. 10 shows the change in the air-fuel ratio (A/F)in which is shown in FIG. 4 enlarged. Note that, as explained above, the change in the air-fuel ratio (A/F)in of the exhaust gas which flows into the exhaust purification catalyst 13 simultaneously shows the change in the concentration of hydrocarbons which flow into the exhaust purification catalyst 13. Note that, in FIG. 10, ΔH shows the amplitude of the change in concentration of the hydrocarbons HC which flow into the exhaust purification catalyst 13, while ΔT shows the vibration period of the concentration of hydrocarbons which flow into the exhaust purification catalyst 13.

Furthermore, in FIG. 10, (A/F)b expresses the base air-fuel ratio which shows the air-fuel ratio of the combustion gas for generating the engine output. In other words, this base air-fuel ratio (A/F)b expresses the air-fuel ratio of the exhaust gas which flows into the exhaust purification catalyst 13 when stopping the feed of hydrocarbons. On the other hand, in FIG. 10, X shows the upper limit of the air-fuel ratio (A/F)in which is used for production of reducing intermediates without the produced active NO_{X} being stored in the basic layer 53 in the form of nitrates. To make the active NO_{X} and the reformed hydrocarbons react and produce reducing intermediates, it is necessary to make the air-fuel ratio (A/F)in lower than the upper limit X of the air-fuel ratio.

In other words, X of FIG. 10 expresses the lower limit of the concentration of hydrocarbons which is necessary for reacting the active NO_{X} with the reformed hydrocarbons and producing reducing intermediates. To cause production of reducing intermediates, it is necessary to raise the concentration of hydrocarbons to above this lower limit X as well. In this case, whether reducing intermediates are produced is determined by the ratio between concentration of oxygen and the concentration of hydrocarbons around the active NO_{X}, that is, the air-fuel ratio (A/F)in. The above-mentioned upper limit X of the air-fuel ratio which is necessary for causing production of reducing intermediates will be referred to below as the "demanded minimum air-fuel ratio".

In the example which is shown in FIG. 10, the demanded minimum air-fuel ratio X becomes rich. Therefore, in this case, to cause production of reducing intermediates, the air-fuel ratio (A/F)in is instantaneously made the demanded minimum air-fuel ratio X or less, that is, rich. As opposed to this, in the example which is shown in FIG. 11, the demanded minimum air-fuel ratio X is lean. In this case, the air-fuel ratio (A/F)in is maintained lean while periodically lowering the air-fuel ratio (A/F)in so as to produce reducing intermediates.

In this case, whether the demanded minimum air-fuel ratio X becomes rich or lean depends on the oxidizing power of the exhaust purification catalyst 13. In this case, the exhaust purification catalyst 13 for example becomes stronger in oxidizing power if increasing the amount of precious metal catalyst 51 carried and becomes stronger in oxidizing power if strengthening the acidity. Therefore, the oxidizing power of the exhaust purification catalyst 13 changes depending on the amount of the precious metal catalyst 51 carried or the strength of the acidity.

Now, when using an exhaust purification catalyst 13 with a strong oxidizing power, as shown in FIG. 11, if maintaining the air-fuel ratio (A/F)in lean while periodically lowering the air-fuel ratio (A/F)in, when the air-fuel ratio (A/F)in is lowered, the hydrocarbons end up being completely oxidized and as a result the reducing intermediates can no longer be produced. As opposed to this, when using an exhaust purification catalyst 13 with a strong oxidizing power, as shown in FIG. 10, if periodically making the air-fuel ratio (A/F)in rich, part of the hydrocarbons are partially oxidized without being completely oxidized when the air-fuel ratio (A/F)in is made rich, that is, the hydrocarbons are reformed, and therefore reducing intermediates are produced. Therefore, when using an exhaust purification catalyst 13 with a strong oxidizing power, the demanded minimum air-fuel ratio X has to be made rich.

On the other hand, when using an exhaust purification catalyst 13 with a weak oxidizing power, as shown in FIG. 11, if maintaining the air-fuel ratio (A/F)in lean while periodically lowering the air-fuel ratio (A/F)in, part of the hydrocarbons are partially oxidized without being completely oxidized, that is, the hydrocarbons are reformed, and therefore reducing intermediates are produced. As opposed to this, if using an exhaust purification catalyst 13 with a weak oxidizing power, as shown in FIG. 10, if making the air-fuel ratio (A/F)in periodically rich, a large amount of hydrocarbons is simply exhausted from the exhaust purification catalyst 13 without being oxidized and therefore the amount of hydrocarbons which is wastefully consumed increases. Therefore, when using an exhaust purification catalyst 13 with a weak oxidizing power, the demanded minimum air-fuel ratio X must be made lean.

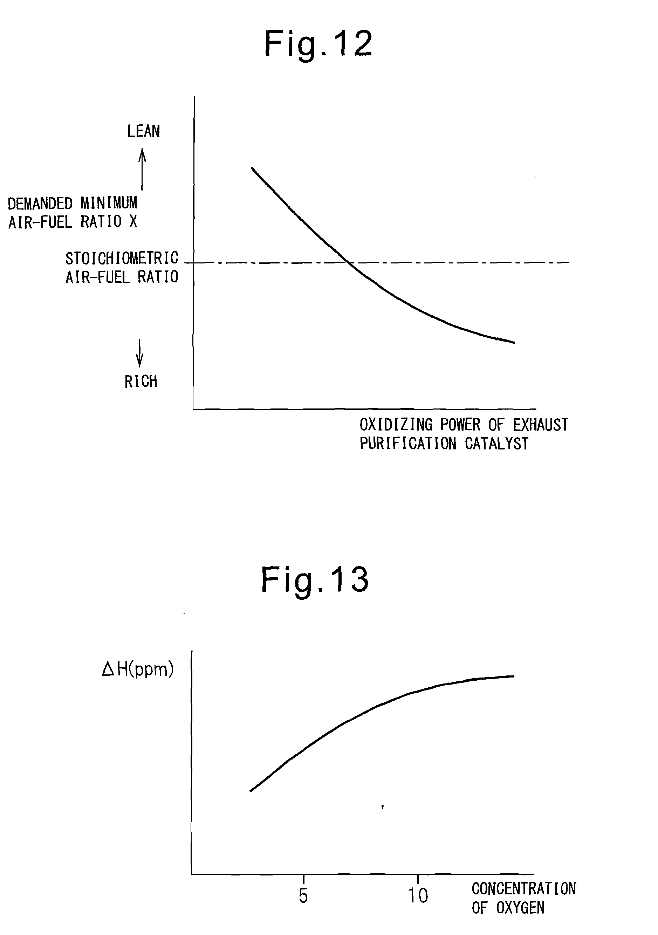

That is, it is learned that the demanded minimum air-fuel ratio X, as shown in FIG. 12, has to be lowered the stronger the oxidizing power of the exhaust purification catalyst 13. In this way, the demanded minimum air-fuel ratio X is made lean or rich by the oxidizing power of the exhaust purification catalyst 13, but below the case where the demanded minimum air-fuel ratio X is rich will be used as an example to explain the amplitude of the change in the concentration of hydrocarbons which flow into the exhaust purification catalyst 13 or the vibration period of the concentration of hydrocarbons which flow into the exhaust purification catalyst 13.

Now then, if the base air-fuel ratio (A/F)b becomes larger, that is, if the concentration of oxygen in the exhaust gas before the hydrocarbons are fed becomes higher, the amount of feed of hydrocarbons required for making the air-fuel ratio (A/F)in the demanded minimum air-fuel ratio X or less increases. Along with this, the excess amount of hydrocarbons which fail to contribute to generation of reducing intermediates is increased. In this case, to remove NO_{X} well, as explained above, it is necessary to cause the excess hydrocarbons to oxidize. Therefore, to remove the NO_{X} well, the greater the amount of excess hydrocarbons, the greater the amount of oxygen which is required.

In this case, if raising the concentration of oxygen in the exhaust gas, it is possible to increase the amount of oxygen. Therefore, to remove the NO_{X} well, when the concentration of oxygen in the exhaust gas before the hydrocarbons are fed is high, it is necessary to raise the concentration of oxygen in the exhaust gas after the feed of hydrocarbons. That is, the higher the concentration of oxygen in the exhaust before hydrocarbons are fed, the larger the amplitude of the concentration of hydrocarbons has to be made.

FIG. 13 shows the relationship between the concentration of oxygen in the exhaust gas before hydrocarbons are fed and the amplitude ΔH of the concentration of hydrocarbons when the same NO_{X} removal rate is obtained. From FIG. 13, it is learned that to obtain the same NO_{X} removal rate, the higher the concentration of oxygen in the exhaust gas before hydrocarbons are fed, the more the amplitude ΔH of the concentration of hydrocarbons has to be increased. That is, to obtain the same NO_{X} removal rate, the higher the base air-fuel ratio (A/F)b, the more the amplitude ΔH of the concentration of hydrocarbons has to be increased. In other words, to remove the NO_{X} well, it is possible to reduce the amplitude ΔH of the concentration of hydrocarbons the lower the base air-fuel ratio (A/F)b becomes.

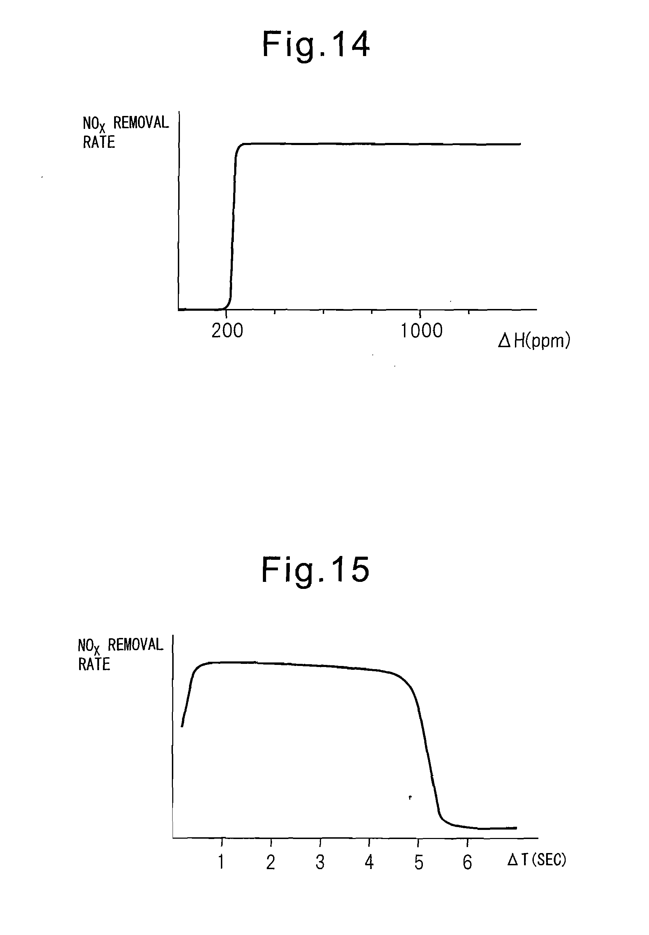

In this regard, the base air-fuel ratio (A/F)b becomes the lowest at the time of acceleration operation. At this time, if the amplitude ΔH of the concentration of hydrocarbons is 200 ppm or so, NO_{X} can be removed well. The base air-fuel ratio (A/F)b usually becomes larger than the time of acceleration operation. Therefore, as shown in FIG. 14, a good NO_{X} removal rate can be obtained if the amplitude ΔH of the concentration of hydrocarbon is 200 ppm or more.

On the other hand, it is learned that when the base air-fuel ratio (A/F)b is the highest, if making the amplitude ΔH of the concentration of hydrocarbons 10000 ppm or so, a good NO_{X} removal rate can be obtained. Therefore, in the present invention, the predetermined range of amplitude of the concentration of hydrocarbons is made 200 ppm to 10000 ppm.

Further, if the vibration period ΔT of the concentration of hydrocarbons becomes longer, the interval in which the concentration of oxygen around the active NO_{X} becomes high after hydrocarbons are fed to when hydrocarbons are next fed becomes longer. In this case, if the vibration period ΔT of the concentration of hydrocarbons becomes longer than 5 seconds or so, the active NO_{X} starts to be absorbed inside the basic layer 53 in the form of nitrates. Therefore, as shown in FIG. 15, if the vibration period ΔT of the concentration of hydrocarbons becomes longer than 5 seconds or so, the NO_{X} removal rate falls. Therefore, the vibration period ΔT of the concentration of hydrocarbons has to be made 5 seconds or less.

On the other hand, if the vibration period ΔT of the concentration of hydrocarbons becomes about 0.3 second or less, the fed hydrocarbons start to build up on the exhaust gas flow surface of the exhaust purification catalyst 13. Therefore, as shown in FIG. 15, if the vibration period ΔT of the concentration of hydrocarbons becomes about 0.3 second or less, the NO_{X} removal rate falls. Therefore, in the present invention, the vibration period of the concentration of hydrocarbons is made an interval of 0.3 second to 5 seconds.

Now, in an embodiment of the present invention, control can be performed to change the amount of feed of one operation and the feed interval of hydrocarbons from the hydrocarbon feed valve 15 so that the amplitude ΔH and vibration period ΔT of the concentration of hydrocarbons become the optimum values corresponding to the operating state of the engine. The amount of feed of hydrocarbons which can give the amplitude ΔH of the concentration of hydrocarbons is stored as a function of the amount of fuel injection Q of the fuel injectors 3 and the engine speed N in the form of a map in advance inside the ROM 32 of the electronic control unit 30. Further, the vibration amplitude ΔT of the concentration of hydrocarbons, that is, feed interval of hydrocarbons, is similarly stored as a function of the amount of fuel injection Q of the fuel injectors 3 and engine speed N in the form of a map in advance in the ROM 32.

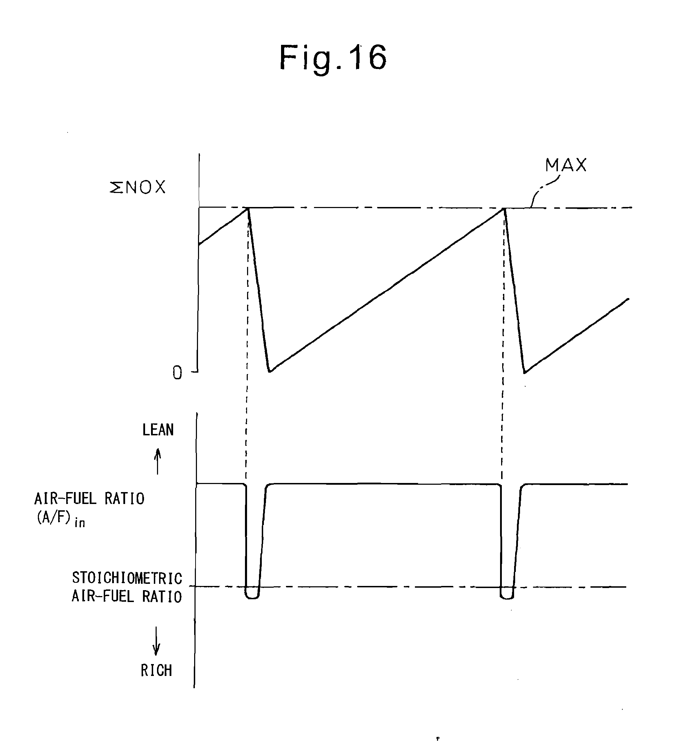

Next, referring to FIG. 16 to FIG. 19, the method of removal of NO_{X} when making the exhaust purification catalyst 13 function as an NO_{X} storage catalyst will be explained in detail. The method of NO_{X} removal when making the exhaust purification catalyst 13 function as an NO_{X} storage catalyst in this way will be referred to below as the "second NO_{X} removal method".

In this second NO_{X} removal method, as shown in FIG. 16, when the stored NO_{X} amount ΣNO_{X} which is stored in the basic layer 53 exceeds a predetermined allowable amount MAX, the air-fuel ratio (A/F)in of the exhaust gas which flows into the exhaust purification catalyst 13 is temporarily made rich. If the air-fuel ratio (A/F)in of the exhaust gas is made rich, the NO_{X} which was stored in the basic layer 53 when the air-fuel ratio (A/F)in of the exhaust gas was lean is released all at once from the basic layer 53 and reduced. Due to this, the NO_{X} is removed.

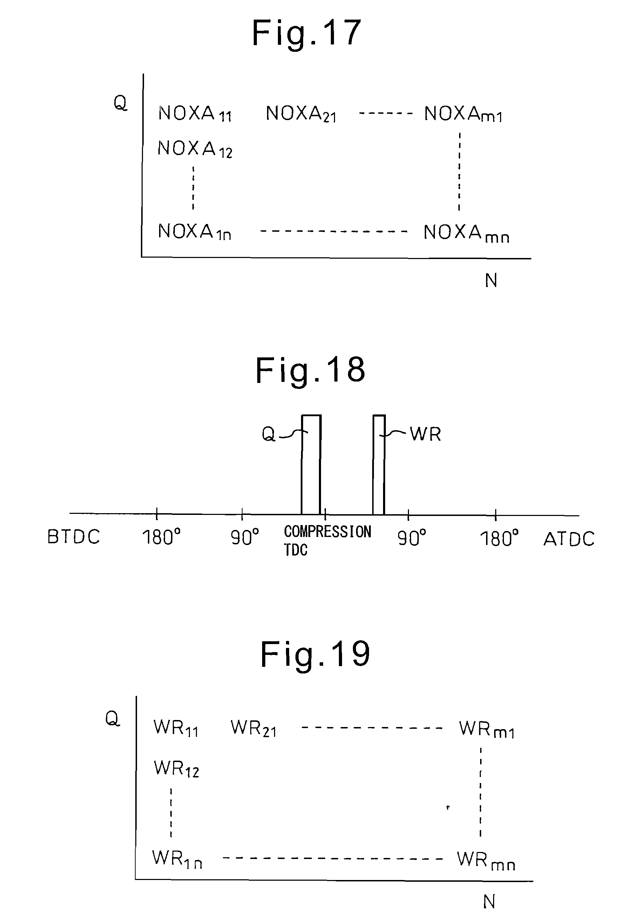

The stored NO_{X} amount ΣNO_{X}, for example, is calculated from the amount of NO_{X} which is exhausted from the engine. In an embodiment according to the present invention, the exhausted NO_{X} amount NOXA which is exhausted from the engine per unit time is stored as a function of the amount of injection Q from the fuel injectors 3 and engine speed N in the form of the map such as shown in FIG. 17 in advance in the ROM 32. The stored NO_{X} amount ΣNO_{X} is calculated from this exhausted NO_{X} amount NOXA. In this case, as explained above, the period during which the air-fuel ratio (A/F)in of the exhaust gas is made rich is usually 1 minute or more.

In this second NO_{X} removal method, as shown in FIG. 18, by injecting additional fuel as auxiliary injection in an amount of injection WR in addition to the amount of injection Q of the main injection of combustion use fuel into the combustion chambers 2 from the fuel injectors 3, the air-fuel ratio (A/F)in of the exhaust gas which flows into the exhaust purification catalyst 13 is made rich. Note that, in FIG. 18, the abscissa shows the crank angle. This additional fuel WR is injected at a timing where it burns, but does not become engine output, that is, slightly before ATDC90° after top dead center of compression. This amount of injection WR of the auxiliary injection is stored as a function of the amount of injection Q from the fuel injectors 3 and engine speed N in the form of the map such as shown in FIG. 19 in advance in the ROM 32. Of course, in this case, it is possible to increase the amount of feed of hydrocarbons from the hydrocarbon feed valve 15 so as to make the air-fuel ratio (A/F)in of the exhaust gas rich.

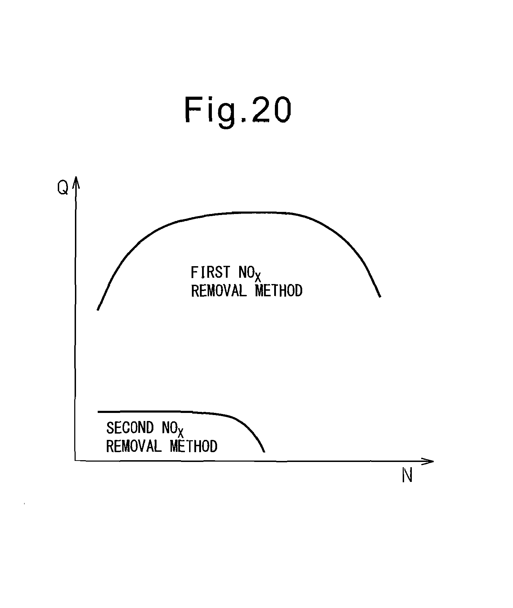

FIG. 20 shows a graph which explains the NO_{X} removal methods of the exhaust purification system of the present embodiment. The abscissa indicates the engine speed N, while the ordinate indicates the amount of injection Q from the fuel injectors 3. FIG. 20 is a view which explains the basic NO_{X} removal methods of an exhaust purification system in the present embodiment.

In the exhaust purification system of the present embodiment, the engine speed and the amount of fuel injection are used to set a region for performing the first NO_{X} removal method and a region for performing the second NO_{X} removal method. To remove NO_{X} with a high removal rate in the first NO_{X} removal method, preferably the exhaust purification catalyst 13 is activated. That is, to sufficiently cause generation of active NO_{X} which flows into the exhaust purification catalyst 13, partial oxidation of hydrocarbons, generation of reducing intermediates, etc., activation of the exhaust purification catalyst is preferable. In the region of a low temperature of the exhaust purification catalyst 13, storage of NO_{X} may be used to remove NO_{X} from the exhaust gas. In terms of the NO_{X} removal rate in the region where the exhaust purification catalyst 13 is low in temperature, the second NO_{X} removal method becomes higher than the first NO_{X} removal method.

In the exhaust purification system of the present embodiment, in a region where the amount of fuel injection Q is small and, further, the engine speed N is small, the second NO_{X} removal method is employed, while in other regions, the first NO_{X} removal method is employed. In this way, the NO_{X} removal method where the NO_{X} removal rate becomes higher among the first NO_{X} removal method and the second NO_{X} removal method can be selected in accordance with the operating state of the internal combustion engine.

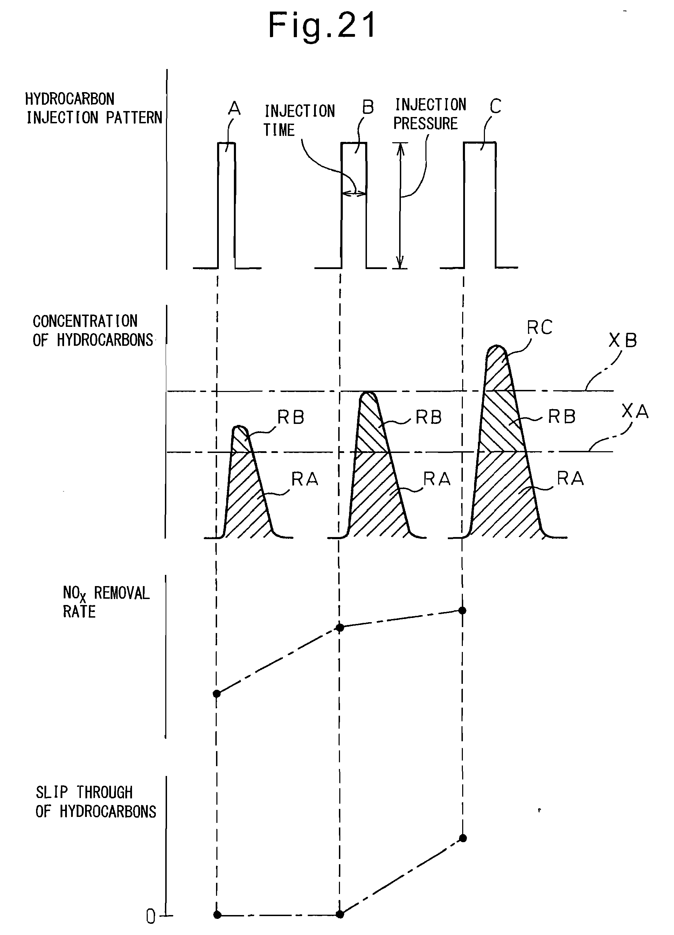

In this regard, when using the first NO_{X} removal method for purification, it is preferable that no matter what the operating state, a high NO_{X} removal rate can be obtained and that the fed hydrocarbons do not slip through the exhaust purification catalyst 13. The inventors studied this point and as a result learned that the amount of hydrocarbons which are completely oxidized and the amount of hydrocarbons which are partially oxidized in the exhaust purification catalyst 13 govern the NO_{X} removal rate and amount of slip through of hydrocarbons. Next, this will be explained with reference to FIG. 21.

FIG. 21 shows three injection patterns A, B, and C of hydrocarbons which are injected from the hydrocarbon feed valve 15 under the same injection pressures but at different injection times. In this case, the injection time is the shortest at the injection pattern A and the longest at the injection pattern C. Further, FIG. 21 shows the changes along with time in the concentrations of hydrocarbons in the exhaust gas which flows into the exhaust purification catalyst 13 after injection by the injection patterns A, B, and C. Furthermore, FIG. 21 shows the NO_{X} removal rates and the amounts of slip through of hydrocarbons of the exhaust purification catalyst 13 when injection is performed by the injection patterns A, B, and C.

Now then, when the concentration of hydrocarbons in the exhaust gas which flows into the exhaust purification catalyst 13, that is, the amount of hydrocarbons per unit exhaust gas amount, is small, the hydrocarbons end up being completely oxidized in the exhaust purification catalyst 13. On the other hand, if the concentration of hydrocarbons in the exhaust gas, that is, the amount of hydrocarbons per unit exhaust gas amount, increases, it becomes impossible for the exhaust purification catalyst 13 to completely oxidize all of the hydrocarbons. At this time, part of the hydrocarbons are partially oxidized. In this way, in the concentration of hydrocarbons in the exhaust gas, there is a limit at which all hydrocarbons are completely oxidized in the exhaust purification catalyst 13. This limit is shown in FIG. 21 by XA.

That is, in FIG. 21, when the concentration of hydrocarbons is lower than the limit XA, all hydrocarbons are completely oxidized, so in FIG. 21, in the hatching area RA below the limit XA, all of the hydrocarbons are completely oxidized. In this case, the area of the hatching area RA shows the amount of hydrocarbons, therefore an amount of hydrocarbons which corresponds to the hatching area RA is completely oxidized. Note that, below, this limit XA is called the "complete oxidation limit".

On the other hand, in FIG. 21, in the hatching area RB above the complete oxidation limit XA, a partial oxidation action of hydrocarbons is performed at the exhaust purification catalyst 13. In this case, in FIG. 21, the hatching area RB shows the amount of hydrocarbons which are partially oxidized. A reducing intermediate is produced from the partially oxidized hydrocarbons, so the partially oxidized hydrocarbons are used for the action of removal of NO_{X} by the first NO_{X} removal method. Note that, in actuality, part of the partially oxidized hydrocarbons ends up being oxidized without being used for production of the reducing intermediate and the remaining partially oxidize hydrocarbons are used to produce the reducing intermediate.

On the other hand, if the concentration of hydrocarbons in the exhaust gas which flows into the exhaust purification catalyst 13, that is, the amount of hydrocarbons per unit exhaust gas amount, is further increased, part of the hydrocarbons are no longer partially oxidized much less being completely oxidized at the exhaust purification catalyst 13. In this case, the not oxidized part of hydrocarbons slip through the exhaust purification catalyst 13. The limit of hydrocarbons which causes this slip through of hydrocarbons is shown in FIG. 21 by XB. Below, this limit XB will be called the "slip through limit". In FIG. 21, the hatching area RC above the slip through limit XB shows the amount of slip through of hydrocarbons.

To remove the NO_{X} which is contained in exhaust gas using the first NO_{X} removal method, a sufficient amount of hydrocarbons for the amount of NO_{X} which is contained in the exhaust gas must be partially oxidized. If the amount of hydrocarbons which are partially oxidized shown by the hatching area RB is insufficient, the NO_{X} removal rate falls. The injection pattern A in FIG. 21 shows the case where the amount of hydrocarbons which are partially oxidized is insufficient. In this case, as shown in FIG. 21, the NO_{X} removal rate falls.

On the other hand, in FIG. 21, the injection pattern B shows the case where the injection time is lengthened compared with the injection pattern A so as to increase the amount of hydrocarbons which are partially oxidized shown by the hatching area RB. If the injection time is made longer, the amount of hydrocarbons which are partially oxidized increases, so, as shown in FIG. 21, the NO_{X} removal rate rises.

In FIG. 21, the injection pattern C shows the case where the amount of hydrocarbons which are partially oxidized is further increased by the injection time being made further longer than the injection pattern B. In this case, as shown in FIG. 21, the NO_{X} removal rate rises. However, in this case, the concentration of hydrocarbons exceeds through the slip through limit XB, so slip through of hydrocarbons occurs.

When performing an NO_{X} removal action by the first NO_{X} removal method, it is preferable that slip through of hydrocarbons not occur. Therefore, in the example which is shown in FIG. 21, the injection pattern B where the peak of the concentration of hydrocarbons (the maximum value) becomes the slip through limit XB is used. Of course, as shown in the injection pattern A, even if the peak of the concentration of hydrocarbons does not reach the slip through limit XB, if a sufficiently high NO_{X} removal rate is obtained, the injection pattern A can be used.

Now then, if the temperature of the exhaust purification catalyst 13 rises, at the exhaust purification catalyst 13, the amount of hydrocarbons which are oxidized per unit time increases, that is, the oxidation rate with respect to the hydrocarbons increases. As a result, if the temperature of the exhaust purification catalyst 13 rises, the complete oxidation limit XA rises. On the other hand, if the temperature of the exhaust purification catalyst 13 rises, the hydrocarbons which slip through before the temperature rises are partially oxidized, so the slip through limit XB also rises. That is, if the temperature of the exhaust purification catalyst 13 rises, both the complete oxidation limit XA and the slip through limit XB rise. Therefore, when using the first NO_{X} removal method to remove NO_{X}, this must be considered in control of injection of hydrocarbons.

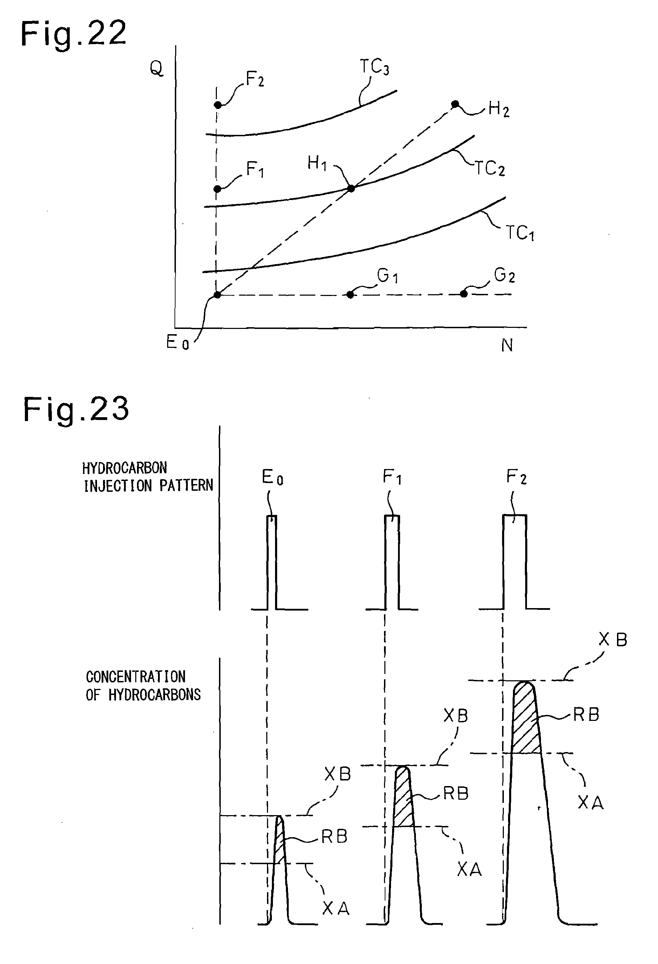

FIG. 22 to FIG. 25 show an example of operation which considers this in control of the injection of hydrocarbons. Note that, in this example of operation, the injection pressure is maintained constant and the injection time is controlled under a constant injection pressure to control the amount of injection of hydrocarbons.

First, if explaining FIG. 22, FIG. 22 shows a typical example of the temperatures TC1, TC2, and TC3 (TC3>TC2>TC1) of the exhaust purification catalyst 13 at the time of a steady operation. Note that, in FIG. 22, the ordinate indicates the fuel injection amount Q to the inside of the combustion chamber 2, while the abscissa indicates the engine speed N. As will be understood from FIG. 22, when the engine speed N is the same, the greater the fuel injection amount Q, that is, the higher the engine load, the higher the temperature of the exhaust purification catalyst 13, while when the fuel injection amount Q is the same, that is, when the engine load is the same, the higher the engine speed N, that is, the greater the intake air amount, the temperature of the exhaust purification catalyst 13 falls somewhat.

In this way, the temperature of the exhaust purification catalyst 13 changes in accordance with the operating state of the internal combustion engine. On the other hand, the amount of NO_{X} which is exhausted from the engine per unit time increases the higher the engine load and increases the higher the engine speed. Therefore, the injection time of hydrocarbons is determined considering this.

FIG. 23 shows the injection patterns at the time of steady operation at E0, F1, and F2 of FIG. 22, that is, at the same speeds and different loads. That is, under the same speed, the higher the load, the higher the temperature of the exhaust purification catalyst 13 and therefore the higher the complete oxidation limit XA and the slip through limit XB. On the other hand, under the same speed, the higher the load, the greater the amount of NO_{X} exhausted from the engine, therefore, at this time, the higher the load, the more necessary it is to increase the amount of partially oxidized hydrocarbons which are shown by the hatching area RB. Therefore, at this time, in this example of operation, as shown in FIG. 23, the injection time is increased as the load rises so that the peak of the concentration of hydrocarbons becomes the slip through limit XB.

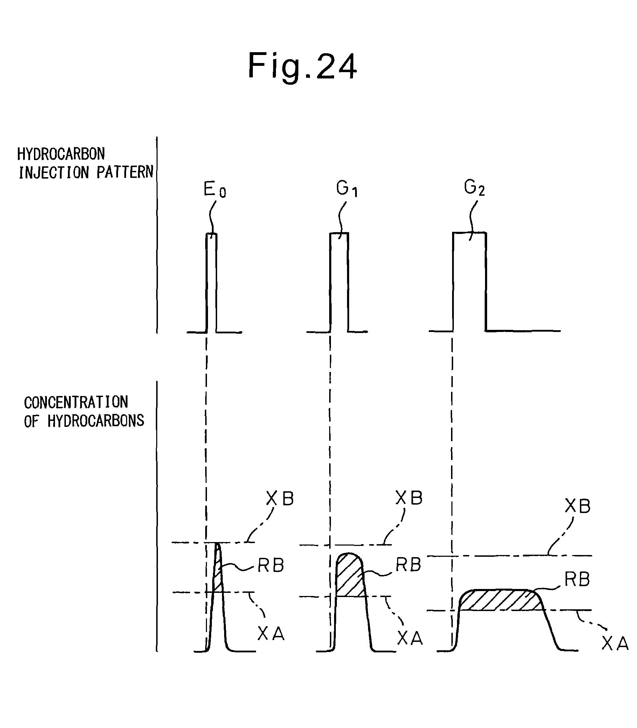

FIG. 24 shows the injection patterns at E0, G1, and G2 in FIG. 22, that is, at the time of steady operation at the same loads but different speeds. That is, under the same load, the higher the speed, the more the temperature of the exhaust purification catalyst 13 falls somewhat, therefore the more the complete oxidation limit XA and the slip through limit XB become somewhat lower. On the other hand, even under the same load, the higher the speed, the more the amount of NO_{X} which is exhausted from the engine per unit time increases. Therefore, at this time as well, the higher the speed, the more the amount of hydrocarbons which are partially oxidized shown by the hatching area RB has to be increased.

On the other hand, the higher the speed, the faster the flow rate of the exhaust gas and the more the injected hydrocarbons are dispersed in a large amount of exhaust gas. Therefore, as shown in FIG. 24, the peak of the concentration of hydrocarbons when the amount of partially oxidized hydrocarbons required for removal of NO_{X} falls the higher the speed. In this example of operation, the injection time is made longer as the speed rises so as to enable the production of the amount of partially oxidized hydrocarbons required for removal of NO_{X}.

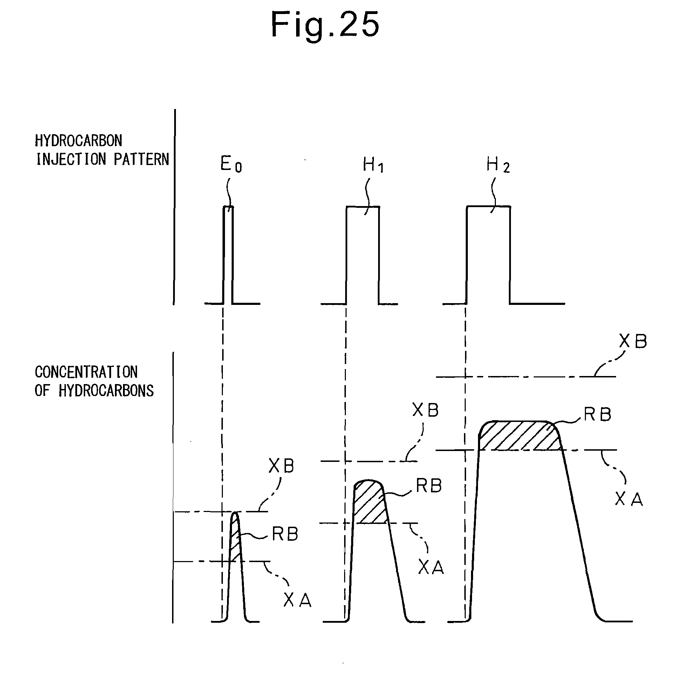

FIG. 25 shows injection patterns at the time of steady operation in E0, H1, and H2 of FIG. 22. That is, the higher the speed and load, the higher the temperature of the exhaust purification catalyst 13 and therefore the higher the complete oxidation limit XA and the slip through limit XB as well. On the other hand, the higher the engine speed and the load, the greater the amount of NO_{X} which is exhausted from the engine per unit time. Therefore, at this time, the higher the speed and the load, the more than amount of hydrocarbons which are partially oxidized shown by the hatching area RB have to be increased. Therefore, in the example of operation, as shown in FIG. 25, the injection time is made longer as the speed and load rise so as to enable production of the amount of hydrocarbons which are partially oxidized required for removal of NO_{X}.

In this way, the injection time of the hydrocarbon feed valve can be made longer the greater the fuel injection amount Q, that is, the greater the engine load, and can be made longer the higher the engine speed N. The injection time of the hydrocarbon feed valve in the case of this example of operation can, for example, be stored in advance as a function of the fuel injection amount Q and the engine speed N in the form of a map in the ROM 32.

In this regard, in the above example of operation, as shown in FIG. 24 and FIG. 25, if the engine speed rises, even if lengthening the injection time of the hydrocarbon feed valve, the maximum value of the concentration of hydrocarbons of the exhaust gas which flows into the exhaust purification catalyst is limited. For this reason, it is necessary to lengthen the injection time during which the hydrocarbon feed valve is open and to increase the amount of hydrocarbons which are partially oxidized shown by the hatching area RB.

In this regard, the exhaust purification system of the internal combustion engine in the present embodiment is provided with an injection pattern changing device which can change the injection pattern of hydrocarbons of the hydrocarbon feed valve. The injection pattern of hydrocarbons includes the injection time of the hydrocarbon feed valve or the feed interval of the hydrocarbons. Furthermore, the injection pattern includes the injection pressure of the hydrocarbon feed valve. The injection pattern changing device in the present embodiment has the function of changing the injection pressure when the hydrocarbon feed valve injects hydrocarbons. Referring to FIG. 1, the injection pattern changing device in the present embodiment includes the pressurizing pump 61 and the high pressure fuel chamber 62. By operating the pressurizing pump 61, it is possible to adjust the pressure of hydrocarbons of the high pressure fuel chamber 62 and, further, adjust the injection pressure of the hydrocarbon feed valve 15.

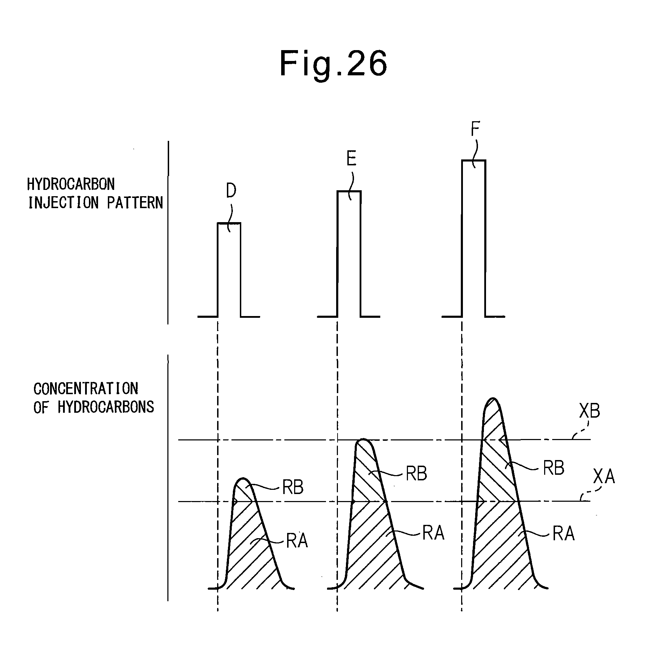

FIG. 26 is an explanatory view of the concentration of hydrocarbons of the exhaust gas which flows into the exhaust purification catalyst when changing the injection pressure of the hydrocarbon feed valve. FIG. 26 is a graph of when changing the injection pressure of the hydrocarbon feed valve in one steady operating state of the internal combustion engine. For example, in the respective injection patterns, the engine speed and the fuel injection amount at a combustion chamber are the same. FIG. 26 describes the injection pattern D, the injection pattern E, and the injection pattern F of hydrocarbons. The respective injection patterns D, E, and F are the same in the lengths of time when the hydrocarbon feed valve is opened, that is, the injection times. The injection pressure at the time of feeding hydrocarbons is gradually raised in the order of the injection pattern D, the injection pattern E, and the injection pattern F of hydrocarbons.

In the injection pattern D, the maximum value of the concentration of hydrocarbons of the exhaust gas which flows into the exhaust purification catalyst is larger than the complete oxidation limit XA and is smaller than the slip through limit XB. In the injection pattern E, the maximum value of the concentration of hydrocarbons substantially matches the slip through limit XB. Furthermore, in the injection pattern F, the maximum value of the concentration of hydrocarbons is higher than the slip through limit XB. That is, in the injection pattern F, hydrocarbons which slip through the exhaust purification catalyst are formed. In this way, it is learned that if raising the injection pressure of the hydrocarbon feed valve, the maximum value of the concentration of hydrocarbons of the exhaust gas which flows into the exhaust purification catalyst becomes higher. That is, by changing the injection pressure of the hydrocarbon feed valve, it is possible to adjust the maximum value of the concentration of hydrocarbons of the exhaust gas.

Therefore, in the operational control which performs the first NO_{X} removal method of the present embodiment, control is performed so that the greater the engine speed, the more the injection pressure of the hydrocarbon feed valve is raised. Control is performed so that the maximum value of the concentration of hydrocarbons of the exhaust gas which flows into the exhaust purification catalyst substantially matches the slip through limit. In the present invention, in the normal operation of the internal combustion engine where operation is performed based on the demanded load, the operational control for removing NO_{X} by the first NO_{X} removal method is called the "first operational control".

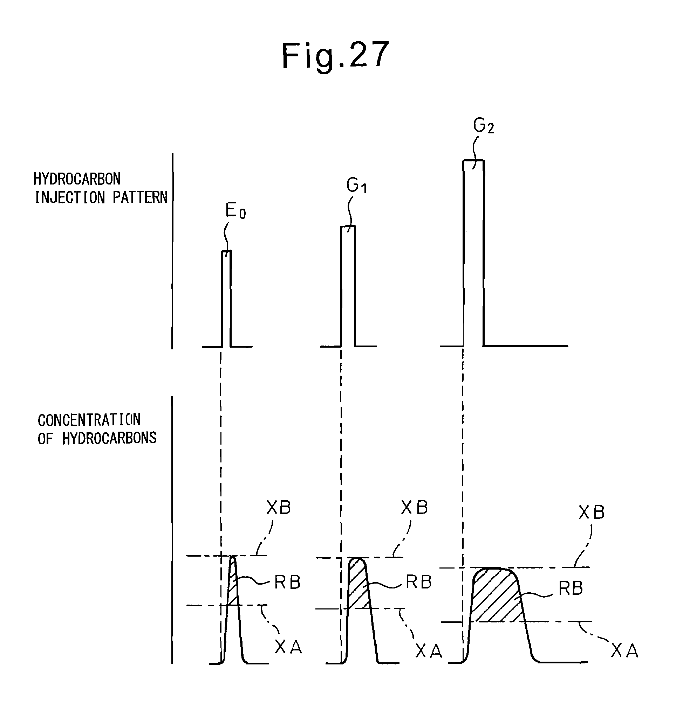

Referring to FIG. 27 to FIG. 31, the first operational control of the present embodiment will be explained. In the first operational control of the present embodiment, when controlling the injection of hydrocarbons from the hydrocarbon feed valve 15, not only the injection time but also the injection pressure is controlled. Specifically speaking, the injection time and the injection pressure of hydrocarbons are controlled so that the peak of concentration of hydrocarbons matches the slip through limit XB while securing the amount of hydrocarbons to be partially oxidized shown by the hatching area RB demanded in accordance with the operating state of the engine.

Now then, in E0, F1, and F2 of FIG. 22, as shown in FIG. 23, it is possible to change just the injection time so as to make the peak of the concentration of hydrocarbons match the slip through limit XB. Therefore, in this case, the injection pressure is maintained constant without particularly changing the injection pressure.

As opposed to this, in E0, G1, and G2 of FIG. 22, as shown in FIG. 24, even if changing just the injection time, the peak of the concentration of hydrocarbons does not reach the slip through limit XB. Therefore, in the first operational control of the present embodiment, in E0, G1, and G2 of FIG. 22, as shown in FIG. 27, to make the peak of the concentration of hydrocarbons match the slip through limit XB, the higher the engine speed, the more the injection pressure is raised. On the other hand, if the injection pressure is raised, the injection time which is required for securing the partial oxidation amount which is demanded becomes shorter. This will be understood well if comparing for example G2 of FIG. 24 and G2 of FIG. 27.

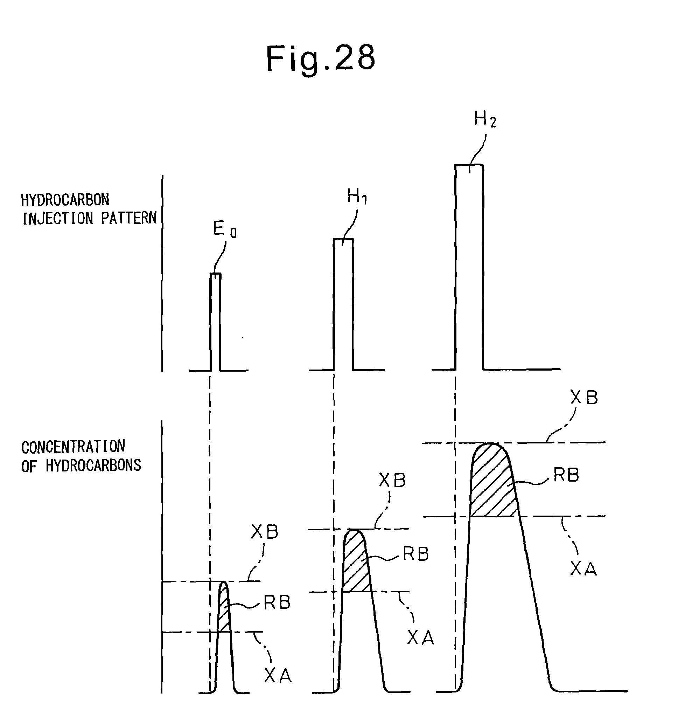

FIG. 28 shows the injection patterns at the time of normal operation at E0, H1, and H2 of FIG. 22. From FIG. 28, it will be understood that the higher the engine speed and load, the more the injection pressure is raised. Further, if compared with the injection patterns of FIG. 25, in this case as well, at the points H1 and H2, the injection times become shorter. If an injection time becomes shorter, the amount of hydrocarbons which is completely oxidized is reduced, so there is the advantage that it is possible to reduce the amount of fuel consumption.

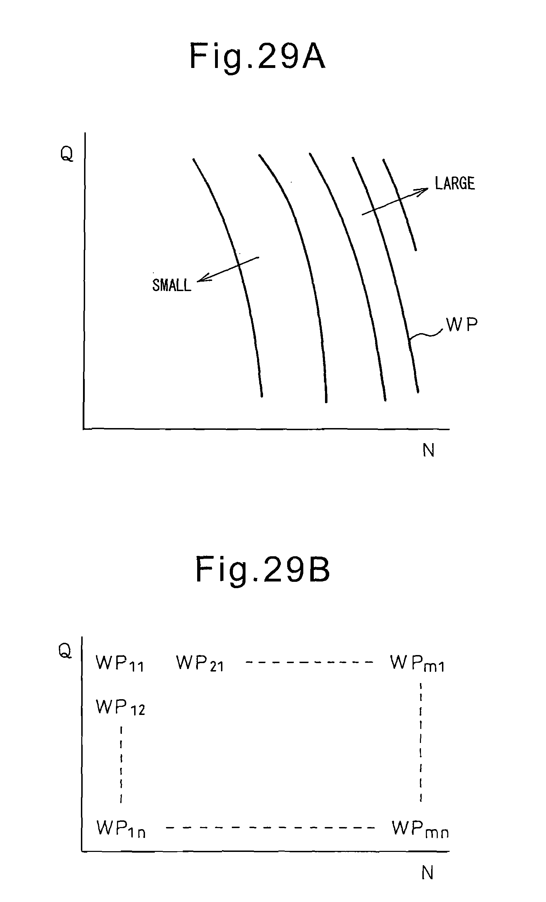

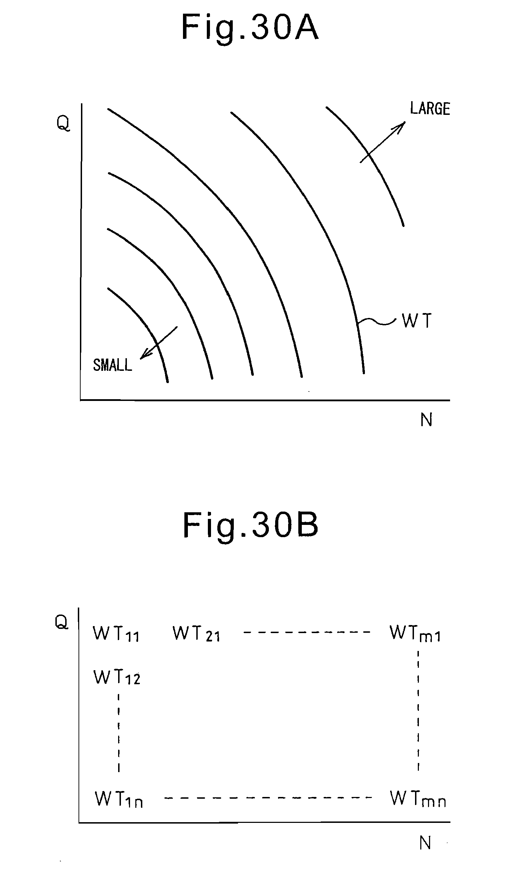

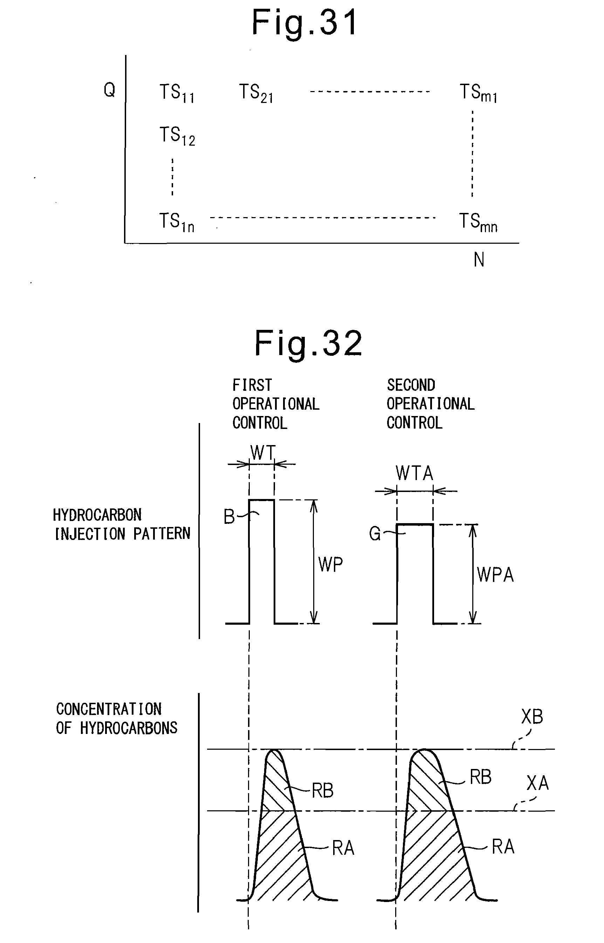

FIG. 29A and FIG. 30A show the equal injection pressure lines WP or equal injection time lines WT which enable the production of the amount of hydrocarbons which are partially oxidized required for removal of NO_{X} at the time of steady operation of the internal combustion engine. As will be understood from FIG. 29A and FIG. 30A, the injection pressure WP and the injection time WT of hydrocarbons become greater the greater the fuel injection amount Q, that is, the greater the engine load, and become greater the higher the engine speed N. These injection pressure WP and injection time WT at steady operation are stored as functions of the fuel injection amount Q and the engine speed N in the form of the maps such as shown in FIG. 29B and FIG. 30B in advance in the ROM 32. Further, as shown in FIG. 31, the vibration amplitude ΔT of the concentration of hydrocarbons at a steady operation, that is, the feed interval of the hydrocarbons TS, is similarly stored as a function of the fuel injection amount Q and the engine speed N in the form of a map in advance in the ROM 32.

In this way, in the first operational control of the present embodiment, the injection pressure which is shown in FIG. 29B, the injection time WT which is shown in FIG. 30B, and the feed interval TS which is shown in FIG. 31 can be used as the basis to inject hydrocarbons from the hydrocarbon feed valve. As the operating state of the internal combustion engine, for example, the state of a low engine speed and low fuel injection amount such as shown by the point E0 of FIG. 22 and the state of a high engine speed higher than the low engine speed and of a high fuel injection amount greater in injection amount than the low fuel injection amount such as shown by the point H2 may be illustrated. In first operational control, when shifting from the state of the low engine speed and low fuel injection amount to the state of the high engine speed and high fuel injection amount, control can be performed to lengthen the injection time of the hydrocarbon feed valve and furthermore raise the injection pressure. By performing this control, it is possible to suppress the amount of hydrocarbons which are fed for removing the NO_{X} while removing the NO_{X} by a high removal rate.

Referring to FIG. 1, the exhaust purification system of the present embodiment has a particulate filter 14 arranged downstream of the exhaust purification catalyst 13. To remove the particulate matter which builds up at the particulate filter 14, control is performed to raise the temperature of the particulate filter 14. In the control of the present embodiment, the amount of hydrocarbons which are fed to the exhaust purification catalyst 13 is increased. That is, a hydrocarbon increasing operation is performed to increase the amount of hydrocarbons which are fed to the exhaust purification catalyst 13 in a predetermined time. For example, the amount of hydrocarbons which are fed to the exhaust purification catalyst averaged per unit time is increased. In the present invention, during the period of the first operational control, the control for increasing the amount of hydrocarbons fed from the hydrocarbon feed valve to the exhaust purification catalyst in a predetermined time is called the "second operational control".

By increasing the amount of hydrocarbons which are fed to the exhaust purification catalyst 13, the oxidation reaction of the hydrocarbons at the exhaust purification catalyst 13 is increased. For this reason, the temperature of the exhaust purification catalyst 13 rises and the temperature of the exhaust gas which flows out from the exhaust purification catalyst 13 rises. As a result, the temperature of the exhaust gas which flows into the particulate filter 14 rises and the temperature of the particulate filter 14 can be raised.

In this regard, in the first operational control in the present embodiment, the operating state of the internal combustion engine is used as the basis to feed hydrocarbons by any of the injection pattern which is shown in FIG. 23, the injection pattern which is shown in FIG. 27, or the injection pattern which is shown in FIG. 28. That is, the hydrocarbons are fed so that the maximum value of the concentration of hydrocarbons of the exhaust gas which flows into the exhaust purification catalyst substantially matches the slip through limit XB.

When increasing the amount of hydrocarbons which are fed to the exhaust purification catalyst, it is possible to lengthen the injection time of one operation of the hydrocarbon feed valve. In this regard, if lengthening the injection time when the maximum value of the concentration of hydrocarbons substantially matches the slip through limit XB, the hydrocarbons will end up slipping through the exhaust purification catalyst. For example, referring to FIG. 21, when using the injection pattern B to feed hydrocarbons, if lengthening the injection time and using the injection pattern C to feed hydrocarbons, the concentration of hydrocarbons ends up exceeding the slip through limit XB. As a result, the hydrocarbons slip through the exhaust purification catalyst.

Alternatively, when increasing the amount of hydrocarbons which are fed to the exhaust purification catalyst, it is possible to raise the injection pressure of the hydrocarbon feed valve. In this regard, if raising the injection pressure when the maximum value of the concentration of hydrocarbons substantially matches the slip through limit XB, the hydrocarbons end up slipping through the exhaust purification catalyst. For example, referring to FIG. 26, when using the injection pattern E to feed hydrocarbons, if raising the injection pressure and using the injection pattern F to feed hydrocarbons, the concentration of hydrocarbons will end up exceeding the slip through limit XB. For this reason, the hydrocarbons slip through the exhaust purification catalyst. Furthermore, if increasing the amount of hydrocarbons which are fed to the exhaust purification catalyst by changing the air-fuel ratio of the exhaust gas to the rich side, the hydrocarbons become insufficiently dispersed at the exhaust purification catalyst. For this reason, the oxidation reaction of the hydrocarbons becomes insufficient and the amount of hydrocarbons which slip through the exhaust purification catalyst increases.

Referring to FIG. 1, in the exhaust purification system of the internal combustion engine of the present embodiment, the hydrocarbons which flow out from the exhaust purification catalyst 13 flow into the particulate filter 14. When the hydrocarbons flow into the particulate filter 14, the hydrocarbons sometimes slip through the particulate filter 14 and cause white smoke. Alternatively, when the particulate filter 14 includes an oxidation catalyst, sometimes the hydrocarbons are oxidized and the temperature of the particulate filter 14 becomes higher than the allowable temperature.

Therefore, in second operational control of the present embodiment, when increasing the amount of hydrocarbons which are fed to the exhaust purification catalyst, control is performed to lower the injection pressure from the hydrocarbon feed valve from the injection pressure in the first operational control.

FIG. 32 is an explanatory view of the injection patterns of hydrocarbons and the concentration of hydrocarbons in the second operational control of the present embodiment. FIG. 32 describes examples of first operational control and second operational control. As the injection pattern of the first operational control of hydrocarbons, the injection pattern of hydrocarbons B which is shown in FIG. 21 is illustrated. Further, as an example of the second operational control, the injection pattern G is described. The operating states of the internal combustion engine at the respective injection patterns are the same. For example, the engine speed and the fuel injection amount at a combustion chamber are the same.

In the injection pattern B of the first operational control, one injection time WT and injection pressure WP are used to feed the hydrocarbons. As opposed to this, in the injection pattern G of the second operational control, one injection time WTA and injection pressure WPA are used to feed the hydrocarbons. Control is performed to make the injection time WTA at the second operational control longer than the injection time WT at the first operational control. By performing this control, it is possible to increase the amount of feed of hydrocarbons per injection operation.

Furthermore, the injection pressure WPA of the second operational control is set smaller than the injection pressure WP of the first operational control. By performing this control, the maximum value of the concentration of hydrocarbons of the exhaust gas which flows into the exhaust purification catalyst can be suppressed. In the example which is shown in FIG. 32, the maximum value of the concentration of hydrocarbons can be kept from exceeding the slip through limit XB.

If comparing the change in concentration of hydrocarbons in the first operational control and the change in concentration of hydrocarbons in the second operational control, the maximum value of the concentration of hydrocarbons substantially matches the slip through limit XB of the hydrocarbons. Furthermore, the injection pattern G is set longer in injection time than the injection pattern B, so the time during which the hydrocarbons are fed can be made longer. As a result, it is learned that compared with the hatching area RA which shows the amount of hydrocarbons which are completely oxidized, the amount becomes greater in the second operational control compared with the first operational control. That is, in the second operational control, it is possible to completely oxidize more of the hydrocarbons in the exhaust purification catalyst compared with the first operational control and possible to raise the temperature of the exhaust purification catalyst.

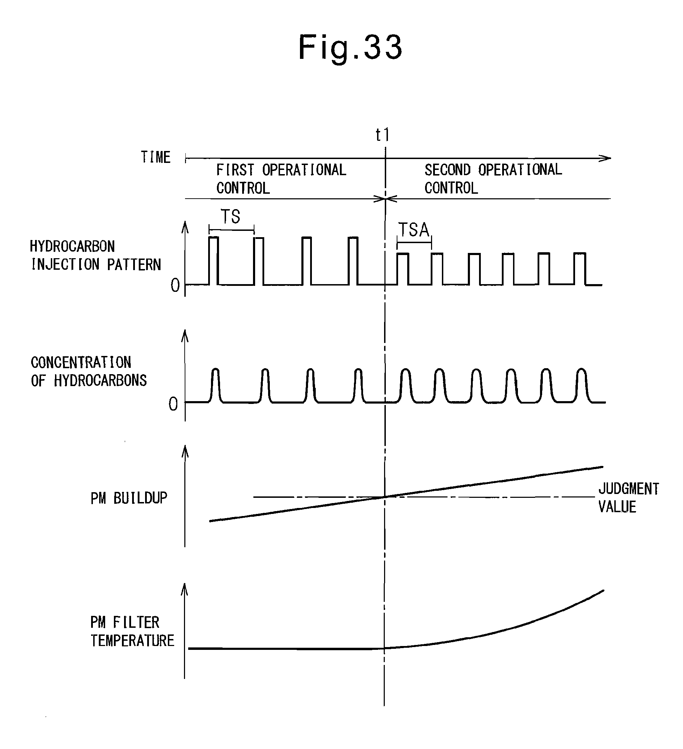

FIG. 33 shows a time chart of switching from the first operational control to the second operational control in the exhaust purification system in the present embodiment. Up to the time t1, first operational control is performed. The injection pattern of hydrocarbons from the hydrocarbon feed valve uses the predetermined feed interval TS to feed hydrocarbons. Further, for example, it uses the injection pattern B which is shown in FIG. 32 to feed hydrocarbons. The amount of buildup of particulate matter at the particulate filter gradually increases along with the continuation of operation. At the time t1, the amount of buildup of the particulate matter at the particulate filter exceeds a predetermined judgment value.

At the time t1, the particulate filter is regenerated by switching from the first operational control to second operational control. In the second operational control, for example, the injection pattern B which is shown in FIG. 32 is changed to the injection pattern G. Further, the feed interval TSA of the hydrocarbons in the second operational control of the present embodiment becomes shorter than the feed interval TS in the first operational control. Note that, the feed interval of the hydrocarbons in the present embodiment is the length of time between the timing of start of one injection of the hydrocarbons and the timing of start of the next injection of hydrocarbons.

In the second operational control of the present embodiment, the injection pressure and the injection time from the hydrocarbon feed valve and the feed interval of the hydrocarbons are changed in the injection pattern. At the time of the same operating state of the internal combustion engine, compared with the first operational control, the second operational control lowers the injection pressure of hydrocarbons so as to be able to suppress slip through of hydrocarbons in the exhaust purification catalyst 13 while increasing the amount of feed of hydrocarbons. The injection pressure and injection time and the feed interval in the second operational control, for example like in the first operational control, can be set as a function of the engine speed and the fuel injection amount by a map.

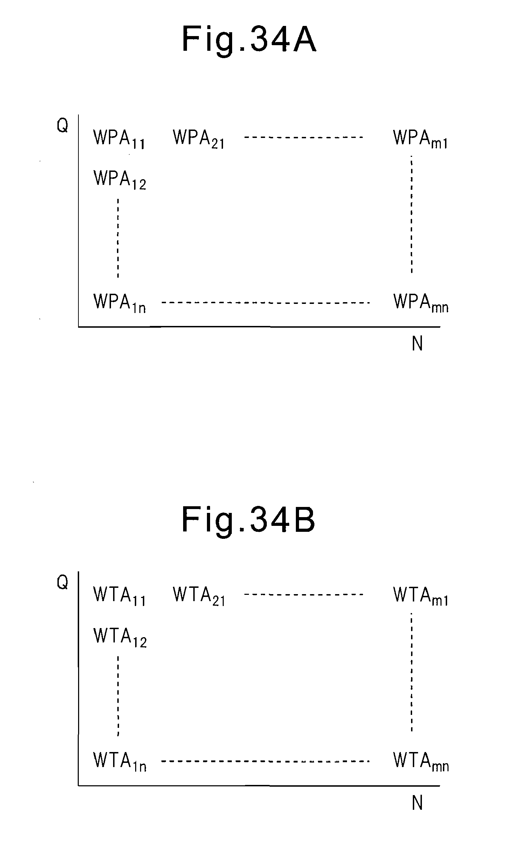

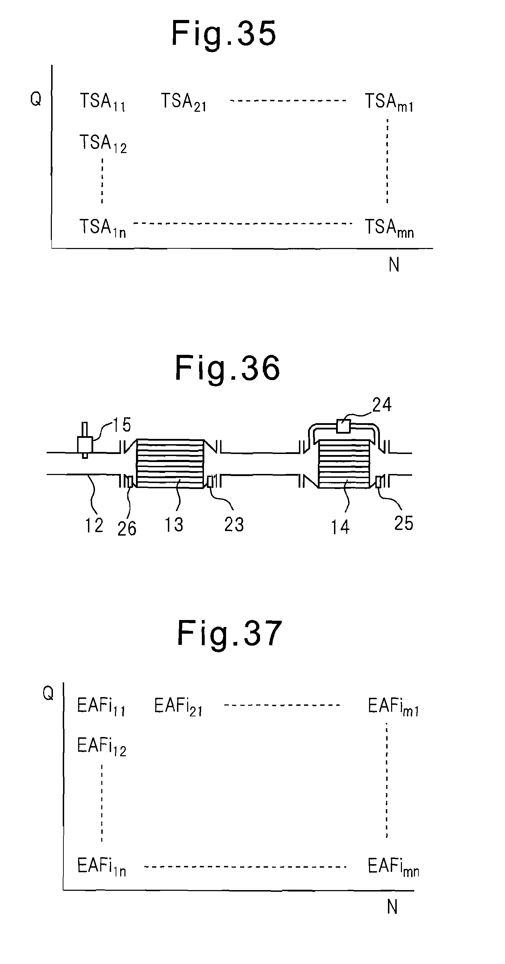

FIG. 34A shows a map of the injection pressure of the hydrocarbon feed valve when performing second operational control. FIG. 34B is a map of the injection time of the hydrocarbon feed valve when performing second operational control. FIG. 35 is a map of the feed interval of the hydrocarbons when performing second operational control. These maps show values at the time of steady operation of the second operational control. The injection pressure of the hydrocarbon feed valve WPA, the injection time WTA, and the feed interval of the hydrocarbons TSA when performing the second operational control can be set as functions of the engine speed and the fuel injection amount. These maps can also be stored in advance in the electronic control unit.

When switching from the first operational control to the second operational control, the map of the injection pattern for the first operational control can be switched to the map of the injection pattern for the second operational control so as to change the injection pattern of hydrocarbons from the hydrocarbon feed valve.

During the period when the second operational control is performed for raising the temperature of the particulate filter 14, for example the temperature sensor 25 can be used to detect the temperature of the particulate filter 14 and the second operational control can be continued until the particulate filter 14 reaches a predetermined temperature.

When the temperature of the particulate filter 14 reaches a predetermined temperature, for example, it is possible to perform control to maintain the temperature of the particulate filter 14 at a predetermined temperature or more. In this control as well, it is possible to perform second operational control which increases the amount of feed of hydrocarbons in a predetermined time compared with the first operational control. Note that, when maintaining the temperature, the amount of feed of hydrocarbons can be reduced compared with control for raising the temperature of the particulate filter. For example, rather than the control for raising the temperature of the particulate filter, it is possible to use an injection pattern which raises the injection pressure and shortens the injection time so as to feed hydrocarbons.

The internal combustion engine of the present embodiment has a map of the injection patterns from the hydrocarbon feed valve at the first operational control and a map of the injection patterns from the hydrocarbon feed valve at the second operational control, but the invention is not limited to this. The injection patterns of the second operational control can be set by modifying the injection patterns of the first operational control. For example, it is possible to multiply the injection time of an injection pattern in the first operational control by a predetermined coefficient larger than 1 so as to set the injection time at the second operational control. It is possible to multiply the injection pressure in the first operational control with a predetermined coefficient smaller than 1 so as to set the injection pressure in the second operational control.

Further, in the present embodiment, as the second operational control, control for making the temperature of the particulate filter rise to a temperature enabling oxidation of the particulate matter or more was performed, but the invention is not limited to this. The second operational control may be applied to any operational control which increases the amount of feed of hydrocarbons from the hydrocarbon feed valve over the amount of feed of hydrocarbons of the first operational control.

For example, sometimes the exhaust gas of an internal combustion engine contains sulfur oxides (SO_{X}). The exhaust purification catalyst in the present embodiment stores SO_{X} simultaneously with storing NO_{X} during the period when the second NO_{X} removal method is used to remove NO_{X}. Referring to FIG. 7A, in the present embodiment, the basic layer 53 of the exhaust purification catalyst 13 stores SO_{X}. If SO_{X} is stored, the amount of NO_{X} which can be stored falls. If making the exhaust purification catalyst function as an NO_{X} storage catalyst in this way, so-called sulfur poisoning occurs. To eliminate sulfur poisoning, sulfur poisoning reversal treatment is performed to make the exhaust purification catalyst release the SO_{X}. SO_{X} is stored in the exhaust purification catalyst in a stabler state compared with NO_{X}. For this reason, in sulfur poisoning reversal treatment, for example, the exhaust purification catalyst is raised in temperature to 600°C or more, then exhaust gas with a rich or stoichiometric air-fuel ratio of the exhaust gas is fed to release the SO_{X}. Even when raising the temperature of the exhaust purification catalyst in such sulfur poisoning reversal treatment, the second operational control in the present embodiment can be applied.

Further, when the exhaust purification system performs the second NO_{X} removal method, the basic layer 53 of the exhaust purification catalyst stores the NO_{X}. For this reason, when switching from the second NO_{X} removal method to the first NO_{X} removal method, control is performed to release the NO_{X} which is stored in the basic layer 53. For example, as shown in FIG. 8 or FIG. 16, the air-fuel ratio of the exhaust gas which flows into the exhaust purification catalyst is made rich to release the NO_{X}. After this, the second NO_{X} removal method is switched the first NO_{X} removal method. In this regard, when the NO_{X} which is stored in the exhaust purification catalyst is greater than a predetermined amount, even if making the air-fuel ratio of the exhaust gas which flows into the exhaust purification catalyst rich, sometimes NO_{X} remains in the basic layer 53. If performing the first NO_{X} removal method in the state where NO_{X} remains at the basic layer 53, sometimes the NO_{X} which remains at the basic layer 53 will flow out.

For this reason, when switching from the second NO_{X} removal method to the first NO_{X} removal method, if the amount of NO_{X} which is stored in the exhaust purification catalyst becomes greater than a predetermined amount, it is possible to feed a large amount of hydrocarbons to the exhaust purification catalyst in a short time at the same time as switching the first NO_{X} removal method. Due to this control, it is possible to release and reduce the NO_{X} which remains in the basic layer of the exhaust purification catalyst. In this way, even in control which feeds a large amount of hydrocarbons for treating the NO_{X} which remains at the basic layer, the second operational control in the present embodiment can be applied.

Next, referring to FIG. 36 to FIG. 44C, correction of the injection pattern of the hydrocarbon feed valve in second operational control in the present embodiment will be explained. In the above embodiment the injection pattern of a hydrocarbon valve is determined based on the steady operation of the internal combustion engine. In this regard, in the transitional operation of the internal combustion engine, sometimes the operation deviates from the operating state of the internal combustion engine at the time of steady operation. For example, right after shifting from the high engine speed and large fuel injection amount state to the low engine speed and small fuel injection amount state, the temperature of the exhaust purification catalyst becomes higher than the time of steady operation. Furthermore, for example, if the engine body, hydrocarbon feed valve, exhaust purification catalyst, etc. deteriorates, sometimes the operation deviates from the operating state of the internal combustion engine which was envisioned in advance.

Therefore, in the exhaust purification system of the internal combustion engine of the present embodiment, during the period when performing the second operational control, correction control is performed to detect the operating state of the internal combustion engine and use the detected operating state of the internal combustion engine as the basis to correct the injection pattern of hydrocarbons of the hydrocarbon feed valve.

In the first correction control of the present embodiment, the air-fuel ratio of the exhaust gas which flows into the exhaust purification catalyst is detected and the detected air-fuel ratio of the exhaust gas is used as the basis to correct the injection pattern.

FIG. 36 is a schematic view of another exhaust purification system in the present embodiment. The other exhaust purification system includes an air-fuel ratio sensor 26 which is arranged at the upstream side from the exhaust purification catalyst 13. The air-fuel ratio sensor 26 of the present embodiment can output a continuous value in accordance with the air-fuel ratio of the exhaust gas. That is, the air-fuel ratio sensor 26 is a linear air-fuel ratio sensor where the air-fuel ratio of the exhaust gas and the output value have a substantially proportional relationship. In the air-fuel ratio sensor 26, the larger the air-fuel ratio of the exhaust gas (the leaner the air-fuel ratio of the exhaust gas), the greater the output.

The air-fuel ratio sensor 26 is arranged downstream from the hydrocarbon feed valve 15 as well. The air-fuel ratio sensor 26 detects the air-fuel ratio of the exhaust gas which contains hydrocarbons which are fed from the hydrocarbon feed valve 15. The output of the air-fuel ratio sensor 26 is input to the electronic control unit 30.

In the present embodiment, the reference value of the air-fuel ratio of the exhaust gas which flows into the exhaust purification catalyst 13 at a steady operation of the internal combustion engine is set in advance. When detecting the air-fuel ratio of the exhaust gas which flows into the exhaust purification catalyst 13 and the detected air-fuel ratio of the exhaust gas deviates from the reference value of the air-fuel ratio of the exhaust gas, the detected air-fuel ratio of the exhaust gas and the reference value of the air-fuel ratio of the exhaust gas are used as the basis to change the injection pattern of hydrocarbons at the hydrocarbon feed valve 15.

When the detected air-fuel ratio of the exhaust gas is smaller than the reference value of the air-fuel ratio of the exhaust gas, the hydrocarbons at the exhaust purification catalyst 13 deteriorate in oxidation reactivity. That is, in the exhaust purification catalyst 13, the oxidation reaction of the hydrocarbons is insufficient. For this reason, sometimes hydrocarbons slip through the exhaust purification catalyst 13. In the first correction control of the present embodiment, the smaller the detected air-fuel ratio of the exhaust gas, the lower the injection pressure of the hydrocarbon feed valve 15. That is, the rich depth of the air-fuel ratio of the exhaust gas which flows into the exhaust purification catalyst 13 is reduced. By reducing the maximum value of the concentration of hydrocarbons of the exhaust gas which flows into the exhaust purification catalyst 13, it is possible to keep the hydrocarbons from slipping through the exhaust purification catalyst.

FIG. 37 shows a map of the reference value of the air-fuel ratio of the exhaust gas in the present embodiment. In the present embodiment, the reference value of the air-fuel ratio of the exhaust gas which flows into the exhaust purification catalyst at the steady operation of the internal combustion engine is set. As the operating state of the internal combustion engine for setting the reference value of the air-fuel ratio of the exhaust gas, the engine speed, the fuel injection amount at the combustion chamber, and the amount of feed of hydrocarbons from the hydrocarbon feed valve may be illustrated. Here, the amount of feed of the hydrocarbons from the hydrocarbon feed valve can be set based on the engine speed and the fuel injection amount. For this reason, in the present embodiment, as the operating state of the internal combustion engine for setting the reference value of the air-fuel ratio of the exhaust gas, the engine speed and the fuel injection amount is employed. In the present embodiment, the reference value of the air-fuel ratio of the exhaust gas EAFi which flows into the exhaust purification catalyst can be set based on the engine speed N and the fuel injection amount Q.

Next, the set reference value of the air-fuel ratio of the exhaust gas and the air-fuel ratio of the exhaust gas which is detected by the air-fuel ratio sensor are used as the basis to set the injection pressure and injection time of the hydrocarbon feed valve and the feed interval of the hydrocarbons. In the present embodiment, the injection pressure WPA, the injection time WTA, and the feed interval TSA which are set at the second operational control are corrected by being multiplied with correction coefficients.

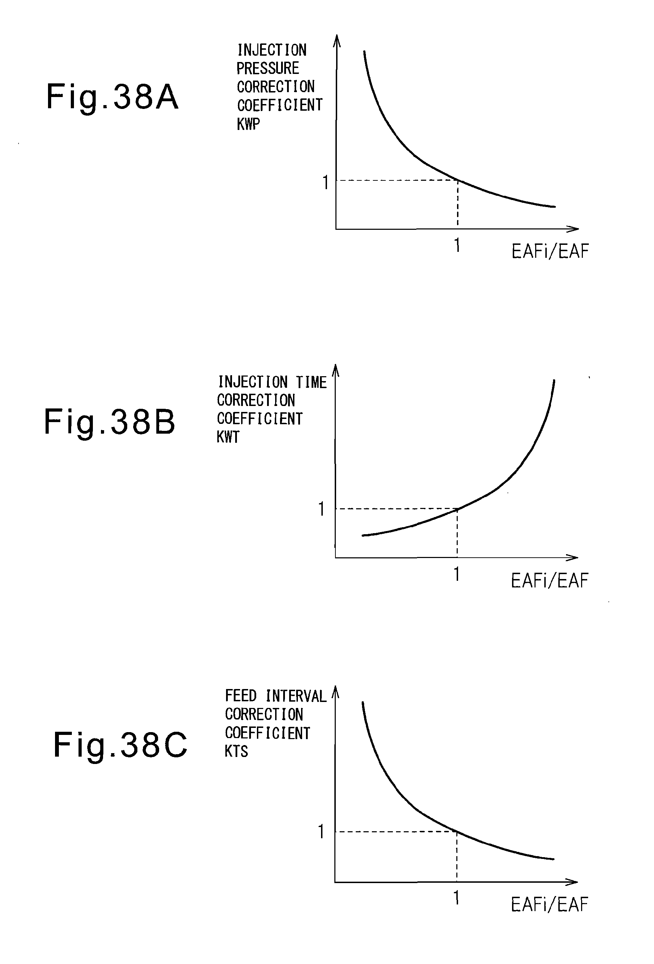

FIG. 38A is a graph of the correction coefficient when using the detected air-fuel ratio of the exhaust gas to set the injection pressure of the hydrocarbon feed valve. The abscissa is the ratio of the reference value of the air-fuel ratio of the exhaust gas EAFi to the detected air-fuel ratio EAF of the exhaust gas (EAFi/EAF). That is, the abscissa shows the ratio of the air-fuel ratio of the exhaust gas. The ordinate is the correction coefficient KWP of the injection pressure. The greater the ratio of the reference value of the air-fuel ratio of the exhaust gas EAFi to the detected air-fuel ratio EAF of the exhaust gas (the richer the detected air-fuel ratio of the exhaust gas), the smaller the correction coefficient KWP of the injection pressure. That is, control is performed so that the smaller the detected air-fuel ratio of the exhaust gas, the lower the injection pressure is made. In particular, when the detected air-fuel ratio of the exhaust gas is smaller than the reference value of the air-fuel ratio of the exhaust gas, correction is performed so as to lower the injection pressure of the hydrocarbon feed valve from before correction.

FIG. 38B is a graph of the correction coefficient when using the detected air-fuel ratio of the exhaust gas to set the injection time of the hydrocarbon feed valve. The greater the ratio of the reference value of the air-fuel ratio of the exhaust gas EAFi to the detected air-fuel ratio EAF of the exhaust gas, the greater the correction coefficient KWT of the injection time is made. Control is performed so that the smaller the detected air-fuel ratio EAF of the exhaust gas, the more the injection time of the hydrocarbon feed valve is extended. That is, the smaller the detected air-fuel ratio EAF of the exhaust gas, the longer the injection time of the hydrocarbon feed valve. In particular, when the detected air-fuel ratio EAF of the exhaust gas is smaller than the reference value of the air-fuel ratio of the exhaust gas EAFi, correction is performed to extend the injection time of the hydrocarbon feed valve from before correction.

FIG. 38C is a graph of the correction coefficient when using the detected air-fuel ratio of the exhaust gas to set the feed interval of the hydrocarbon feed valve. Control is performed so that the greater the ratio of the reference value of the air-fuel ratio of the exhaust gas EAFi to the detected air-fuel ratio EAF of the exhaust gas, the smaller the correction coefficient KTS of the feed interval of the hydrocarbon feed valve. Control is performed so that the smaller the detected air-fuel ratio of the exhaust gas, the shorter the feed interval. That is, control is performed so that the smaller the detected air-fuel ratio of the exhaust gas, the shorter the feed interval. In particular, when the detected air-fuel ratio EAF of the exhaust gas is smaller than the reference value of the air-fuel ratio of the exhaust gas, correction is performed to shorten the feed interval of the hydrocarbons from before correction.

In this way, the smaller the detected actual air-fuel ratio of the exhaust gas, the more it is possible to perform correction to lower the injection pressure and to suppress slip through of hydrocarbons. It is possible to make the maximum value of the concentration of hydrocarbons of the exhaust gas which flows into the exhaust purification catalyst equal to or less than the slip through limit.

Further, by performing correction to extend the injection time of the hydrocarbon feed valve, it is possible to make the amount of feed of hydrocarbons per operation after correction substantially the same as the amount of feed of hydrocarbons per operation before correction. That is, correction is performed to lower the injection pressure of hydrocarbons and extend the injection time of hydrocarbons to correct the injection pattern so that the amount of feed of hydrocarbons per operation does not change. By performing this control, it is possible to make the amount of feed of hydrocarbons from the hydrocarbon feed valve in a predetermined time the same as before correction. For example, it is possible to secure the amount of feed of hydrocarbons necessary for raising the temperature of the exhaust purification catalyst. Further, correction can be performed to extend the injection time of the hydrocarbon feed valve and correction can be performed to shorten the feed interval of the hydrocarbons from the hydrocarbon feed valve. That is, correction can be performed to shorten the feed interval of the hydrocarbons.

Note that, in the above first correction control, even in the region where the ratio of the reference value of the air-fuel ratio of the exhaust gas with respect to the actual air-fuel ratio of the exhaust gas is smaller than 1, control is performed to correct the injection pattern of the hydrocarbon feed valve, but the invention is not limited to this. In the region where the ratio of the reference value of the air-fuel ratio of the exhaust gas with respect to the actual air-fuel ratio of the exhaust gas is smaller than 1, the injection pattern need not be corrected. That is, the first correction control may be performed so long as the detected actual air-fuel ratio of the exhaust gas is the reference value of the air-fuel ratio of the exhaust gas or less.

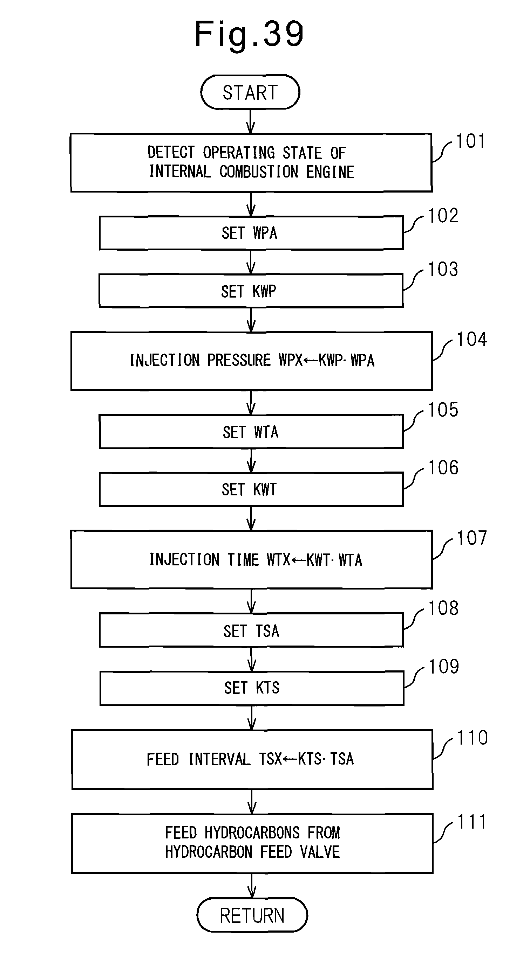

FIG. 39 shows a flowchart of the correction control in the second operational control of the present embodiment. The flow which is shown in FIG. 39 can be performed repeatedly every predetermined time interval in, for example, the period of the second operational control.

At step 101, the operating state of the internal combustion engine is detected. In the present embodiment, the engine speed and the fuel injection amount in the combustion chamber are detected. Furthermore, in the first correction control, the air-fuel ratio sensor 26 is used to detect the air-fuel ratio of the exhaust gas which flows into the exhaust purification catalyst 13.

From step 102 to step 104, the injection pressure of the hydrocarbon feed valve WPA is corrected. At step 102, the injection pressure of the hydrocarbon feed valve WPA is set. The injection pressure of the hydrocarbon feed valve WPA in the second operational control can be set using the detected engine speed and the fuel injection amount from the map which is shown in FIG. 34A.

Next, at step 103, the correction coefficient KWP of the injection pressure is set. The map which is shown in FIG. 37 is used to set the reference value of the air-fuel ratio of the exhaust gas EAFi corresponding to the operating state of the internal combustion engine. The ratio of the reference value of the air-fuel ratio of the exhaust gas EAFi to the detected air-fuel ratio EAF of the exhaust gas (EAFi/EAF) is calculated. The value of the correction coefficient KWP of the injection pressure with respect to the ratio of the air-fuel ratio of the exhaust gas which is shown in FIG. 38A can be stored in the electronic control unit. The ratio of the air-fuel ratio of the exhaust gas (EAFi/EAF) can be used as the basis to set the correction coefficient KWP of the injection pressure.

At step 104, the corrected injection pressure WPX is calculated. In the present embodiment, the injection pressure WPA is multiplied with the correction coefficient KWP to set the corrected injection pressure WPX. In this way, the injection pressure of the hydrocarbon feed valve can be corrected.

Next, from step 105 to step 107, the injection time WTA is corrected. The injection time WTA is also corrected by control similar to the correction of the injection pressure WPA.

At step 105, the map which is shown in FIG. 34B can be used as the basis to set the injection time WTA from the engine speed and the fuel injection amount.

At step 106, the correction coefficient KWT of the injection time is set. The ratio of the reference value of the air-fuel ratio of the exhaust gas to the detected air-fuel ratio of the exhaust gas (EAFi/EAF) is calculated. It is possible to store the value of the correction coefficient KWT of the injection time which corresponds to the ratio of the air-fuel ratio of the exhaust gas (EAFi/EAF) which is shown in FIG. 38B in the electronic control unit. The ratio of the air-fuel ratio of the exhaust gas (EAFi/EAF) can be used as the basis to set the correction coefficient KWT of the injection time.

At step 107, the injection time WTA may be multiplied with the correction coefficient KWT of the injection time so as to set the corrected injection time WTX.

Next, at step 108 to step 110, the feed interval TSA of the hydrocarbons is corrected. The feed interval of the hydrocarbons may also be corrected by a method similar to the injection pressure and the injection time.

At step 108, the feed interval TSA of the hydrocarbons is set. The feed interval of the hydrocarbons TSA can be set using the map which is shown in FIG. 35 based on the engine speed and the fuel injection amount.

At step 109, the correction coefficient KTS of the feed interval of the hydrocarbons is set. The ratio of the reference value of the air-fuel ratio of the exhaust gas to the detected air-fuel ratio of the exhaust gas (EAFi/EAF) is calculated. The value of the correction coefficient KTS of the feed interval with respect to the ratio of the air-fuel ratio of the exhaust gas (EAFi/EAF) which is shown in FIG. 38C can be stored in the electronic control unit. The ratio of the air-fuel ratio of the exhaust gas (EAFi/EAF) can be used as the basis to set the correction coefficient KTS of the feed interval of the hydrocarbons.

At step 110, the feed interval of the hydrocarbons TSX after correction is set. The corrected feed interval TSX can be set by multiplying the feed interval TSA with a correction coefficient KTS.

At step 111, the corrected injection pressure WPX, corrected injection time WTX, and corrected feed interval TSX are used to feed hydrocarbons from the hydrocarbon feed valve.

In the first correction control, even if transitional operation of the internal combustion engine, deterioration of equipment, etc. cause deviation from the operating state at the time of an envisioned steady operation, it is possible to correct the injection pattern of hydrocarbons and keep hydrocarbons from flowing out from the exhaust purification catalyst.

Next, the second correction control in the present embodiment will be explained. In the second correction control, the temperature of the exhaust gas which flows into the exhaust purification catalyst is detected and the detected temperature of the exhaust gas is used as the basis to correct the injection pattern of hydrocarbons of the hydrocarbon feed valve.

When the temperature of the exhaust gas which flows into the exhaust purification catalyst becomes lower than the temperature of the exhaust gas which is envisioned in the state of a steady operation, the temperature of the exhaust purification catalyst also becomes lower than the envisioned temperature. If the temperature of the exhaust purification catalyst falls, the oxidation ability of the exhaust purification catalyst falls, so the hydrocarbons which flow out without being oxidized at the exhaust purification catalyst increase. That is, the amount of hydrocarbons which slip through the exhaust purification catalyst increases. For this reason, in the second correction control, the temperature of the exhaust gas which flows into the exhaust purification catalyst is detected and control is performed so that the lower the detected temperature of the exhaust gas, the lower the injection pressure of the hydrocarbon feed valve is made.

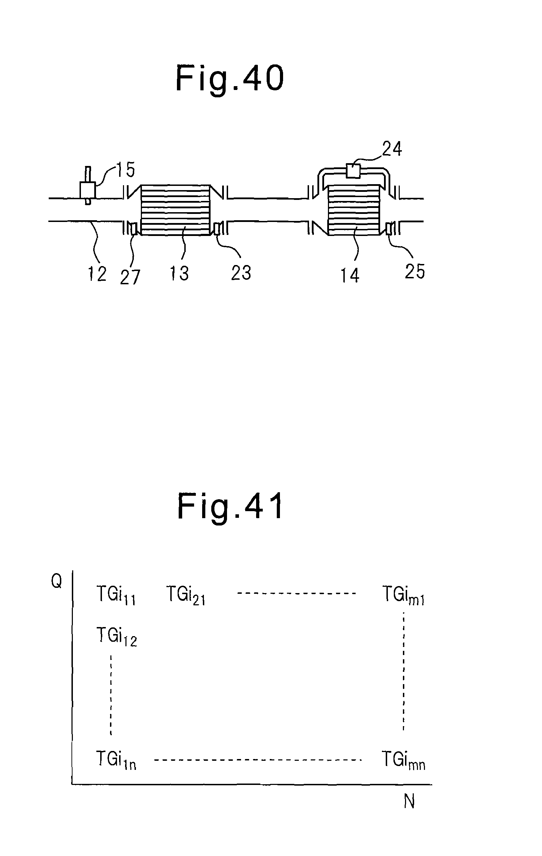

FIG. 40 is a schematic view of a further other exhaust purification system in the present embodiment. In this further other exhaust purification system, at the upstream side of the exhaust purification catalyst 13, a temperature detector constituted by a temperature sensor 27 is arranged. The temperature sensor 27 detects the temperature of the exhaust gas which flows into the exhaust purification catalyst 13. The output of the temperature sensor 27 is input to the electronic control unit 30.

FIG. 41 shows a map of the reference value of the temperature of the exhaust gas which flows into the exhaust purification catalyst. The temperature of the exhaust gas which flows into the exhaust purification catalyst 13 changes in accordance with the operating state of the internal combustion engine. As shown in FIG. 41, the reference value of the temperature TGi of the exhaust gas which flows into the exhaust purification catalyst at the time of steady operation of the internal combustion engine is set in advance. In the present embodiment, the reference value of the temperature TGi of the exhaust gas which flows into the exhaust purification catalyst is stored as a function of the engine speed N and the fuel injection amount Q in the electronic control unit 30.

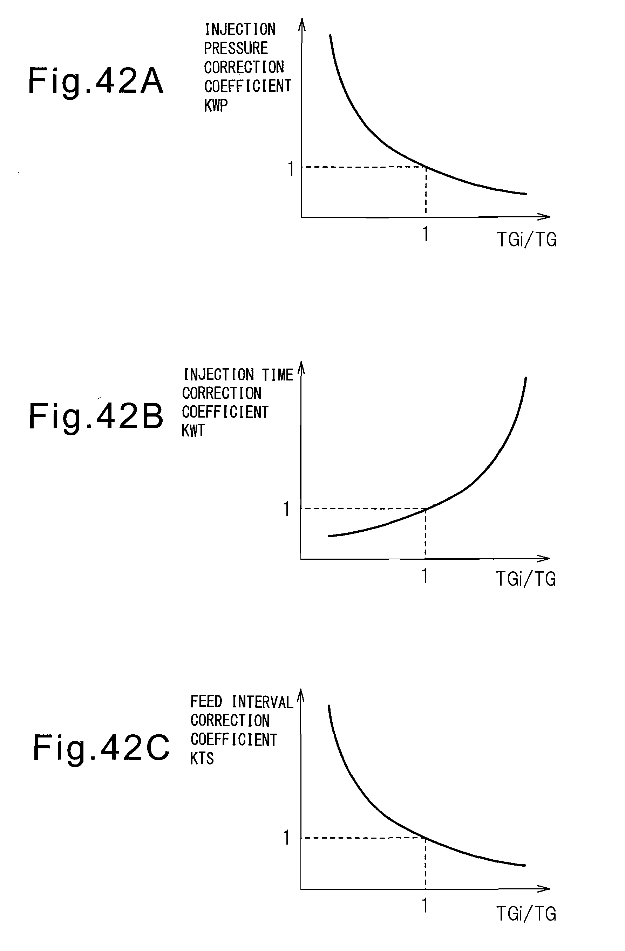

FIG. 42A is a graph of a correction coefficient of the injection pressure of the hydrocarbon feed valve. The abscissa is the ratio (TGi/TG) of the reference value of the temperature TGi of the exhaust gas which flows into the exhaust purification catalyst to the temperature TG of the exhaust gas which flows into the exhaust purification catalyst. The ordinate shows the correction coefficient KWP of the injection pressure. The lower the temperature of the exhaust gas which flows into the exhaust purification catalyst, the more correction can be performed to lower the injection pressure of the hydrocarbon feed valve. In particular, when the detected temperature of the exhaust gas is smaller than the reference value of the temperature of the exhaust gas, correction can be performed to lower the injection pressure of the hydrocarbon feed valve from before correction.

FIG. 42B is a graph of a correction coefficient of the injection time of the hydrocarbon feed valve. The abscissa is the ratio of the temperature of the exhaust gas which flows into the exhaust purification catalyst (TGi/TG). The ordinate shows the correction coefficient KWT of the injection time. The lower the temperature of the exhaust gas which flows into the exhaust purification catalyst, the more correction can be performed to lengthen the injection time of the hydrocarbon feed valve. In particular, when the detected temperature of the exhaust gas is smaller than the reference value of the temperature of the exhaust gas, correction is performed to extend the injection time of the hydrocarbon feed valve from before correction. In the second correction control as well, control is performed so that the amount of feed of hydrocarbons per operation after correction becomes the same as the amount of feed of hydrocarbons per operation before correction.

FIG. 42C is a graph of a correction coefficient of the feed interval of the hydrocarbons. The abscissa is the ratio of the temperature of the exhaust gas which flows into the exhaust purification catalyst (TGi/TG). The ordinate shows the correction coefficient KTS of the feed interval of the hydrocarbons. Control is performed so that the lower the temperature of the exhaust gas which flows into the exhaust purification catalyst, the more the correction coefficient KTS of the feed interval of the hydrocarbons is reduced. Control is performed so that the lower the temperature of the exhaust gas which flows into the exhaust purification catalyst, the longer the injection time of hydrocarbons is made by shortening the feed interval of the hydrocarbons from the hydrocarbon feed valve. In particular, control is performed so that when the detected temperature of the exhaust gas is smaller than the reference value of the temperature of the exhaust gas, the feed interval of the hydrocarbons is shortened from before correction.

In the second correction control of the present embodiment as well, control similar to the control which is shown in FIG. 39 may be used to correct the injection pressure and the injection time of the hydrocarbons and the feed interval of the hydrocarbons. That is, at step 101 of FIG. 39, the temperature of the exhaust gas which flows into the exhaust purification catalyst is detected. At step 103, the correction coefficient KWP of the injection pressure can be set based on the graph of FIG. 42A. The correction coefficient KWT of the injection time at step 106 can be set based on the graph of FIG. 42B. The correction coefficient KTS of the feed interval at step 109 can be set based on the graph of FIG. 42C.

In the second correction control as well, like in the first correction control, even if, due to a transitional operation of the internal combustion engine, deterioration of equipment, etc., deviating from the preset operating state at the time of steady operation, hydrocarbons can be kept from flowing out from the exhaust purification catalyst. Note that, in the second correction control as well, in the region where the ratio of the reference value of the temperature of the exhaust gas to the detected actual temperature of the exhaust gas is smaller than 1, the injection pattern need not be corrected. That is, the second correction control may be performed only when the actual temperature of the exhaust gas is the reference value of the temperature of the exhaust gas or less.

Next, the third correction control in the present embodiment will be explained. In the third correction control, the intake air amount which flows into a combustion chamber is used as the basis to correct the injection pattern of hydrocarbons from the hydrocarbon feed valve.

In third correction control of the present embodiment, the amount of air which is fed from the outside air to a combustion chamber is detected. That is, the amount of fresh air which is fed to the combustion chamber is detected. If the amount of air which is fed to the combustion chamber is smaller than a predetermined reference value of the amount of air which is fed to a combustion chamber, the amount of oxygen which is fed to the exhaust purification catalyst becomes smaller. The reactivity of oxidation of hydrocarbons at the exhaust purification catalyst falls. For this reason, in third correction control, correction is performed so as to lower the injection pressure of the hydrocarbon feed valve the smaller the amount of air which is fed from the outside air to the combustion chamber. Referring to FIG. 1, the amount of air which is fed from the outside air to the combustion chamber, that is, the intake air amount, can be detected by the intake air amount detector (air flowmeter) 8.

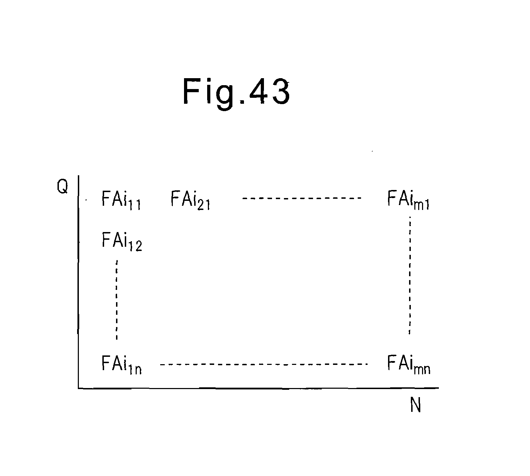

FIG. 43 shows a map of the reference value of the intake,air amount. In the present embodiment, the reference value FAi of the intake air amount at the time of steady operation of the internal combustion engine is predetermined. The reference value FAi of the intake air amount can be set based on the operating state of the internal combustion engine. In the present embodiment, a map of the reference value FAi of the intake air amount is stored in advance as a function of the engine speed N and the fuel injection amount Q in the electronic control unit.

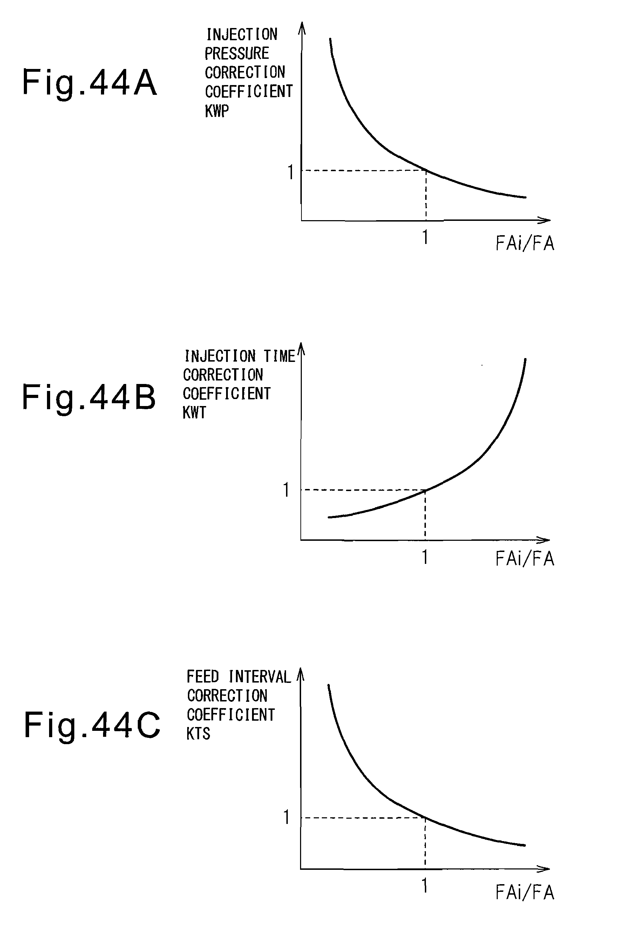

FIG. 44A is a graph of the correction coefficient of the injection pressure. In third correction control of the present embodiment, the ratio (FAi/FA) of the reference value FAi of the intake air amount to the detected intake air amount FA is calculated. The ratio (FAi/FA) of the intake air amount can be used as the basis to set the correction coefficient KWP of the injection pressure. Control is performed so that the smaller the detected intake air amount, the lower the injection pressure is set. In particular, correction may be performed so that when the detected intake air amount is smaller than the reference value of the intake air amount, the injection pressure of the hydrocarbon feed valve is lowered.

FIG. 44B is a graph of the correction coefficient of the injection time. The ratio (FAi/FA) of the intake air amount can be used as the basis to set the correction coefficient KWT of the injection time. Control can be performed so that the smaller the detected intake air amount FA, the longer the injection time becomes. In particular, correction may be performed so that when the detected intake air amount is smaller than the reference value of the intake air amount, the injection time of the hydrocarbon feed valve is extended from before correction. In the third correction control as well, correction is performed to extend the injection time so that the amount of feed of hydrocarbons from the hydrocarbon feed valve per operation becomes substantially the same before correction and after correction.

FIG. 44C is a graph of the correction coefficient KTS of the feed interval. The ratio (FAi/FA) of the intake air amount can be used as the basis to set the correction coefficient KWT. The smaller the detected intake air amount FA, the longer the injection time per operation, so correction can be performed to shorten the feed interval of the hydrocarbons. In particular, correction can be performed so that when the detected intake air amount is smaller than the reference value of the intake air amount, the feed interval of the hydrocarbons is shortened from before correction.

In the third correction control of the present embodiment as well, control similar to the control which is shown in FIG. 39 can be used to correct the injection pressure and the injection time of the hydrocarbons and the feed interval of the hydrocarbons. That is, in FIG. 39, step 101, an intake air detector is used to detect the intake air amount FA. At step 103, the correction coefficient KWP of the injection pressure can be set based on the graph of FIG. 44A. The correction coefficient KWT of the injection time at step 106 can be set based on the graph of FIG. 44B. The correction coefficient KTS of the feed interval at step 109 can be set based on the graph of FIG. 44C.

In the third correction control as well, like in the first correction control, even if, due to a transitional operation of the internal combustion engine, deterioration of equipment, etc., deviating from the preset operating state at the time of steady operation, hydrocarbons can be kept from flowing out from the exhaust purification catalyst. Note that, in the third correction control as well, in the region where the ratio of the reference value of the intake air amount to the detected actual intake air amount is smaller than 1, the injection pattern need not be corrected. That is, the third correction control may be performed only when the actual intake air amount is the reference value of the intake air amount or less.

In the above examples of correction control, as the variables which show the operating state of the internal combustion engine, the air-fuel ratio of the exhaust gas which flows into the exhaust purification catalyst, the temperature of the exhaust gas which flows into the exhaust purification catalyst, and the amount of air which is fed to a combustion chamber were illustrated, but the invention is not limited to this. Any variable which has an effect on the oxidation reactivity of hydrocarbons in the exhaust purification catalyst may be employed. That is, the correction control can perform correction based on any variable which shows the operating state of the internal combustion engine which has an effect on the oxidation reactivity of hydrocarbons in the exhaust purification catalyst and a predetermined reference value of this variable.

For example, in the second correction control of the present embodiment, the temperature of the exhaust gas which flows into the exhaust purification catalyst is detected, but instead of the temperature of the exhaust gas which flows into the exhaust purification catalyst, the temperature of the exhaust purification catalyst may also be detected. Further, instead of the reference value of the temperature of the exhaust gas, it is possible to set a reference value of the temperature of the exhaust purification catalyst. That is, a reference value of the temperature of the exhaust purification catalyst can be determined in advance and the detected temperature of the exhaust purification catalyst and the reference value of the temperature of the exhaust purification catalyst can be used as the basis to change the injection pattern of hydrocarbons from the hydrocarbon feed valve.

Furthermore, in the above examples of correction control, correction is performed based on the ratio of a variable which shows the operating state of the internal combustion engine and the actual detected variable, but the invention is not limited to this. Any correction method based on a reference value of a variable which shows the operating state of the internal combustion engine and the actual detected variable can be employed. For example, correction may be performed based on the value of an actual detected variable which shows the operating state of the internal combustion engine minus the reference value of this variable.

Note that in the above control routines, the order of the steps may be suitably changed within a range not changing the actions and functions. In the above figures, the same or equivalent parts are assigned the same reference notations. Note that the above embodiments are illustrative and do not limit the invention. Further, the embodiments include changes which are shown in the claims.

### Reference Signs List

- 1: engine body
- 2: combustion chamber
- 3: fuel injector
- 8: intake air detector
- 13: exhaust purification catalyst
- 14: particulate filter
- 15: hydrocarbon feed valve
- 22: fuel tank
- 25: temperature sensor
- 26: air-fuel ratio sensor
- 27: temperature sensor
- 30: electronic control unit
- 50: catalyst carrier
- 51, 52: precious metal catalyst
- 53: basic layer
- 54: exhaust gas flow surface part
- 61: pressurizing pump
- 62: high pressure fuel chamber
- 63: fuel pressure sensor

## Claims

1. An exhaust purification system of an internal combustion engine which arranges a hydrocarbon feed valve for feeding hydrocarbons inside of an engine exhaust passage and arranges an exhaust purification catalyst for reacting NOₓ which is contained in exhaust gas and reformed hydrocarbons in the engine exhaust passage downstream of the hydrocarbon feed valve, a precious metal catalyst being carried on an exhaust flow surface of the exhaust purification catalyst and basic exhaust flow surface parts being formed around the precious metal catalyst, wherein
the exhaust purification catalyst has a property of reducing the NO_{X} which is contained in exhaust gas if making a concentration of hydrocarbons which flow into the exhaust purification catalyst vibrate by a predetermined range of amplitude and a predetermined range of period and has a property of a stored amount of NO_{X} which is contained in the exhaust gas increasing if making a vibration period of the concentration of hydrocarbons longer the predetermined range,
the system is formed to perform first operational control where the amplitude of change of the concentration of hydrocarbons which flow into the exhaust purification catalyst at the time of engine operation is made to become within the predetermined range of amplitude by controlling the amount of feed of hydrocarbons from the hydrocarbon feed valve and the concentration of hydrocarbons which flow into the exhaust purification catalyst is made to vibrate by within the predetermined range of period by controlling a feed interval of the hydrocarbons from the hydrocarbon feed valve and second operational control where the amount of feed of hydrocarbons from the hydrocarbon feed value in a predetermined time becomes greater than the amount of feed of hydrocarbons of the first operational control,
the system is further provided with an injection pattern changing device which can change an injection pattern of hydrocarbons of the hydrocarbon feed valve,
the injection pattern changing device is formed so as to enable change of an injection pressure of the hydrocarbon feed valve,
the first operational control includes control so as to raise the injection pressure of the hydrocarbon feed valve the more an engine speed increases, and
in the first operational control, the injection pressure, which is set based on an operating state of the internal combustion engine, is used to feed hydrocarbons from the hydrocarbon feed valve, while in the second operational control, an injection pressure smaller than the injection pressure of hydrocarbons at the first operational control is used to feed hydrocarbons from the hydrocarbon feed valve.

2. The exhaust purification system of an internal combustion engine as set forth in claim 1, wherein
the injection pattern changing device is formed so that an injection time of injecting hydrocarbons from the hydrocarbon feed valve and the feed interval of the hydrocarbons can be changed and,
in the second operational control, the injection time of injecting hydrocarbons from the hydrocarbon feed valve is made longer than the injection time of first operational control and the feed interval of the hydrocarbons is made shorter than the feed interval of the hydrocarbons of the first operational control.

3. The exhaust purification system of an internal combustion engine as set forth in claim 1, wherein
the operating state of the internal combustion engine is used as the basis to set in advance a reference value of an air-fuel ratio of the exhaust gas which flows into the exhaust purification catalyst, and,
during a period of the second operational control, the air-fuel ratio of the exhaust gas which flows into the exhaust purification catalyst is detected and, when a detected air-fuel ratio of the exhaust gas is smaller than the reference value of the air-fuel ratio of the exhaust gas, correction is performed to lower the injection pressure of the hydrocarbon feed valve.

4. The exhaust purification system of an internal combustion engine as set forth in claim 3, wherein
when the detected air-fuel ratio of the exhaust gas is smaller than the reference value of the air-fuel ratio of the exhaust gas, correction is performed to extend an injection time of the hydrocarbon feed valve and correction is performed to shorten the feed interval of the hydrocarbons.

5. The exhaust purification system of an internal combustion engine as set forth in claim 1, wherein
the operating state of the internal combustion engine is used as the basis to set in advance a reference value of a temperature of the exhaust gas which flows into the exhaust purification catalyst, and,
during a period of the second operational control, the temperature of the exhaust gas which flows into the exhaust purification catalyst is detected and when a detected temperature of the exhaust gas is smaller than the reference value of the temperature of the exhaust gas, correction is performed to lower the injection pressure of the hydrocarbon feed valve.

6. The exhaust purification system of an internal combustion engine as set forth in claim 5, wherein
when the detected temperature of the exhaust gas is smaller than the reference value of the temperature of the exhaust gas, correction is performed to extend an injection time of the hydrocarbon feed valve and correction is performed to shorten the feed interval of the hydrocarbons.

7. The exhaust purification system of an internal combustion engine as set forth in claim 1, wherein
the operating state of the internal combustion engine is used as the basis to set in advance a reference value of an amount of air which is fed from outside air to a combustion chamber,
during a period of second operational control, the amount of air which is fed from the outside air to a combustion chamber is detected and, when a detected air amount is smaller than the reference value of the amount of air, correction is performed to lower the injection pressure of the hydrocarbon feed valve.

8. The exhaust purification system of an internal combustion engine as set forth in claim 7, wherein
when the detected air amount is smaller than the reference value of the air amount, correction is performed to extend an injection time of the hydrocarbon feed valve and correction is performed to shorten the feed interval of the hydrocarbons.

9. The exhaust purification system of an internal combustion engine as set forth in claim 1, wherein
the second operational control includes control which increases an oxidation reaction of hydrocarbons at the exhaust purification catalyst over the first operational control so as to raise a temperature of the exhaust purification catalyst.
